# EUROPEAN PATENT APPLICATION

(11) **EP 4 191 299 A1**
(43) Date of publication of application: **07.06.2023**
(21) Application number: 21857159.4
(22) Date of filing: 23.03.2021
(51) Int. Cl.: G02B 6/38, G06K 9/00

(54) **LABEL SYSTEM, INSERTION FRAME AND IDENTIFICATION METHOD**

(30) Priority: 21.08.2020 CN 202010852566
(71) Applicant: Huawei Technologies Co., Ltd., Shenzhen, Guangdong 518129 (CN)
(72) Inventor: KUANG, Li, Shenzhen, Guangdong 518129 (CN); HU, Jian, Shenzhen, Guangdong 518129 (CN); WEN, Yida, Shenzhen, Guangdong 518129 (CN)
(74) Representative: Gill Jennings & Every LLP
(86) International application number: PCT/CN2021/082309
(87) International publication number: WO 2022/037056

(57) **Abstract**

Embodiments of this application disclose a label system, a subrack, and an identification method, to improve efficiency and accuracy of identifying whether an optical fiber connector component has been inserted into a corresponding adapter. The label system includes a subrack, the subrack includes a plurality of adapters, and the label system further includes an optical fiber connector component and an indication surface. The optical fiber connector component includes an optical fiber connector body and a label module, the label module has a target surface, the target surface is opposite to the optical fiber connector body, the target surface is used to set label information, and the label information is used to identify the optical fiber connector body. The indication surface corresponds to the label information, the indication surface is opposite to the adapter, the indication surface is used to set identification information, and the identification information is used to identify the adapter into which the optical fiber connector component is inserted.

## Description

This application claims priority to Chinese Patent Application No. 202010852566.2, filed with the China National Intellectual Property Administration on August 21, 2020 and entitled "LABEL SYSTEM, SUBRACK, AND IDENTIFICATION METHOD", which is incorporated herein by reference in its entirety.

### TECHNICAL FIELD

This application relates to the field of optical fiber communication, and in particular, to a label system, a subrack, and an identification method.

### BACKGROUND

An optical network device includes a network node, the network node includes a plurality of adapters, and each adapter is configured to insert and fix an optical fiber connector component. A quantity of adapters included in the network node is increasing. To ensure that optical signals can be accurately transmitted from a source node to a target node, each optical fiber connector component needs to be accurately inserted into a corresponding adapter.

In a conventional technology, a radio frequency identification (RFID) manner may be used to identify whether an optical fiber connector component has been accurately inserted into a corresponding adapter. Specifically, paired RFID labels are added at the adapter and the optical fiber connector component, an RFID label of the adapter and an RFID label of the optical fiber connector component are identified by a dedicated identification apparatus, and if the detected RFID label of the adapter and the RFID label of the optical fiber connector component are paired, it is determined that the optical fiber connector component has been inserted into the corresponding adapter.

However, identification performed in the RFID manner requires the dedicated identification apparatus, which increases identification costs. When the network node includes a large quantity of adapters and optical fiber connector components, one-by-one identification needs to be performed by the identification apparatus, which reduces identification efficiency.

### SUMMARY

This application provides a label system, a subrack, and an identification method, to improve efficiency and accuracy of identifying whether an optical fiber connector component has been inserted into a corresponding adapter.

A first aspect of embodiments of this application provides a label system. The label system includes a subrack, the subrack includes a plurality of adapters, and the label system further includes an optical fiber connector component and an indication surface. The optical fiber connector component includes an optical fiber connector body and a label module, the label module has a target surface, the target surface is opposite to the optical fiber connector body, the target surface is used to set label information, and the label information is used to identify the optical fiber connector body. The indication surface corresponds to the label information, the indication surface is opposite to the adapter, the indication surface is used to set identification information, and the identification information is used to identify the adapter into which the optical fiber connector component is inserted.

It can be learned that, by using the label system shown in this aspect, a target image may be obtained by capturing the subrack, whether the optical fiber connector body identified by the label information and the adapter identified by the identification information are paired may be directly determined based on the target image, and optical signal transmission may be implemented by using the optical fiber connector body and the adapter that are paired.

It can be learned that whether the optical fiber connector body identified by the label information is connected to an accurate adapter can be directly identified by using the target image, and identification is not performed in a manual manner or by using a dedicated identification apparatus, thereby improving identification accuracy and efficiency.

Moreover, target surfaces of different label modules and indication surfaces of different indication parts are within a visual range or a capturing range and do not overlap with each other, to effectively avoid mutual interference, winding, and the like between different label modules, between different indication parts, and between label modules and indication parts, and reduce difficulty of maintaining the label system.

In addition, there is no mutual blocking between different label information, between different identification information, and between different label information and identification information, and the optical fiber connector body does not block the label information and/or the identification information, to effectively improve efficiency and accuracy of identifying whether the optical fiber connector body and the adapter are paired.

Each label information and each identification information included in the target image are identified by using an image identification technology, automatic recording of the adapter into which the optical fiber connector body has been inserted can be implemented, and recording and statistics of each optical fiber connector body inserted into the subrack and an adapter into which the optical fiber connector body has been inserted can be implemented, to improve efficiency of managing resources of the optical fiber connector body and resources of the adapter in the label system.

Based on the first aspect, in an optional implementation, the label system further includes an indication part, a first end of the indication part is connected to the subrack, a second end of the indication part has the indication surface, and the identification information is close to the label information.

It can be learned that when the identification information is close to the label information, it may be determined whether the optical fiber connector body identified by the label information and the adapter identified by the identification information that are close enough are paired, and identification is not performed in the manual manner or by using the dedicated identification apparatus in an identification process, thereby improving identification accuracy and efficiency.

Based on the first aspect, in an optional implementation, the second end of the indication part is connected to the label module.

It can be learned that, in a state in which the second end of the indication part is connected to the label module, the identification information and the label information can be effectively ensured to always be within the capturing range or the visual range. Therefore, detection of whether the optical fiber connector body identified by the label information and the adapter identified by the identification information are paired is effectively implemented.

Based on the first aspect, in an optional implementation, the subrack includes a fixing base, and the fixing base is inserted into or fixed to a panel of the subrack.

Based on the first aspect, in an optional implementation, the fixing base is a first fixing base, and the first fixing base is inserted with the first end of the indication part and the adapter.

Based on the first aspect, in an optional implementation, the first fixing base includes an insertion groove, an insertion protrusion is formed at the first end, and in a state in which the insertion protrusion is inserted into the insertion groove, the first end is fixed to the first fixing base; and a groove wall of the insertion groove extends in a direction perpendicular to an insertion surface to form a first abutting groove, the insertion surface is a surface on which the insertion protrusion is connected to a groove bottom of the insertion groove, and the adapter is inserted into the first abutting groove.

Based on the first aspect, in an optional implementation, the fixing base is a second fixing base, the second fixing base includes a second abutting groove, the adapter is inserted into the second abutting groove, at least a part of a side wall of a jack of the adapter extends in a direction away from the jack to form the indication part, and the optical fiber connector component is inserted into the adapter via the jack.

Based on the first aspect, in an optional implementation, the fixing base is a third fixing base, the third fixing base includes a third abutting groove, and the adapter is inserted into the third abutting groove; and an outer wall of the third abutting groove extends in a direction away from the third abutting groove to form the indication part.

Based on the first aspect, in an optional implementation, the label system further includes a cover plate disposed on a surface of the subrack, a display area is disposed on the cover plate, a projection formed by the label information in the display area is located in the display area, and the display area is used to display the label information; and a surface of the cover plate includes the indication surface.

It can be learned that, in a manner of setting the identification information on the cover plate, a possibility of interference in the identification process is effectively avoided, thereby improving identification efficiency and identification accuracy.

Based on the first aspect, in an optional implementation, the cover plate includes a plurality of display areas, the surface of the cover plate includes a plurality of indication surfaces respectively corresponding to the plurality of adapters, and a target display area and a target indication surface corresponding to a same adapter are close on the surface of the cover plate.

Based on the first aspect, in an optional implementation, the display area is a transparent area or a hollowed-out area.

Based on the first aspect, in an optional implementation, that the indication surface corresponds to the label information means that the identification information is located in a target orientation of the label information, and that the indication surface corresponds to the label information further means at least one of the following:
a distance between the identification information and the label information is less than or equal to a preset value, or a distance between the label information and the identification information is less than or equal to a distance between the label information and any identification information included in the subrack.

A second aspect of embodiments of this application provides a subrack. The subrack includes a plurality of insertion ports, the insertion ports are configured to insert an adapter, the subrack further includes an indication part, a first end of the indication part is connected to the subrack, a second end of the indication part has an indication surface, the indication surface is opposite to the adapter, identification information is disposed on the indication surface, and the identification information is used to identify the adapter.

For descriptions of beneficial effects shown in this aspect, refer to the first aspect. Details are not described again.

Based on the second aspect, in an optional implementation, the second end of the indication part is connected to a label module, and the label module is configured to identify an optical fiber connector component inserted into the adapter

Based on the second aspect, in an optional implementation, the subrack includes a fixing base, and the fixing base is inserted into or fixed to a panel of the subrack.

Based on the second aspect, in an optional implementation, the fixing base is a first fixing base, and the first fixing base is inserted with the first end of the indication part and the adapter.

Based on the second aspect, in an optional implementation, the first fixing base includes an insertion groove, an insertion protrusion is formed at the first end, and in a state in which the insertion protrusion is inserted into the insertion groove, the first end is fixed to the first fixing base; and a groove wall of the insertion groove extends in a direction perpendicular to an insertion surface to form a first abutting groove, the insertion surface is a surface on which the first end is connected to a groove bottom of the insertion groove, and the adapter is inserted into the first abutting groove.

Based on the second aspect, in an optional implementation, the fixing base is a second fixing base, the second fixing base includes a second abutting groove, the adapter is inserted into the second abutting groove, at least a part of a side wall of a jack of the adapter extends in a direction away from the jack to form the indication part, and the optical fiber connector component is inserted into the adapter via the jack.

Based on the second aspect, in an optional implementation, the fixing base is a third fixing base, the third fixing base includes a third abutting groove, and the adapter is inserted into the third abutting groove; and an outer wall of the third abutting groove extends in a direction away from the third abutting groove to form the indication part.

A third aspect of embodiments of this application provides an identification method, applied to a label system. The method includes: obtaining a target image, where the target image is an image obtained by a camera by capturing a subrack, label information and identification information are located in a capturing range of the camera, the subrack includes a plurality of adapters, the adapter is configured to insert an optical fiber connector component, the label information is used to identify the optical fiber connector component, and the identification information is used to identify the adapter into which the optical fiber connector component is inserted; obtaining, from the target image, the label information and the identification information that correspond to each other; and if a corresponding target adapter exists in the label information, determining whether the adapter identified by the identification information is the target adapter

It can be learned that, by using the method shown in this aspect, the corresponding label information and identification information that are included in the target image can be obtained by using the target image, and then it can be determined whether the optical fiber connector body identified by the label information and the adapter identified by the identification information are paired. It can be learned that whether the optical fiber connector body identified by the label information is connected to an accurate adapter can be directly identified by using the target image, and identification is not performed in a manual manner or by using a dedicated identification apparatus, thereby improving identification accuracy and efficiency.

Based on the third aspect, in an optional implementation, before the determining whether the adapter identified by the identification information is the target adapter, the method further includes: determining, based on the target image, that the label information and the identification information that meet a preset condition correspond to each other, where the preset condition is that the label information and the identification information are close in the target image.

Based on the third aspect, in an optional implementation, the preset condition is that the identification information is located in a target orientation of the label information, and the preset condition is further at least one of the following:
a distance between the identification information and the label information is less than or equal to a first preset value, or a distance between the label information and the identification information is less than or equal to a distance between the label information and any identification information included in the subrack.

Based on the third aspect, in an optional implementation, the determining whether the adapter identified by the identification information is the target adapter includes: obtaining identification information of the target adapter based on the label information and a preset correspondence, where the preset correspondence includes a correspondence between the identification information of the target adapter and the label information;
determining whether the identification information of the target adapter is the same as the identification information; and if the identification information of the target adapter is the same as the identification information, determining that the adapter identified by the identification information is the target adapter.

Based on the third aspect, in an optional implementation, the method further includes: determining, based on a preset correspondence, that the label information does not have corresponding identification information of the target adapter, and generating prompt information, where the prompt information indicates an event indicating that the label information does not have the corresponding identification information of the target adapter.

A fourth aspect of embodiments of this application provides a computer-readable storage medium. The storage medium stores a software program. When the software program is read and executed by one or more processors, the method provided in the fourth aspect may be implemented.

A fifth aspect of embodiments of this application provides a chip. The chip includes a processor, configured to implement the method provided in the fourth aspect. The chip further includes a memory, and the memory is used for program instructions and data executed by the processor.

### BRIEF DESCRIPTION OF DRAWINGS

FIG. 1 is an example diagram of a structure of an embodiment of an optical network according to this application;
FIG. 2 is an example diagram of a structure of an embodiment of a label system in Embodiment 1 according to this application;
FIG. 3 is an example diagram of a structure of another embodiment of a label system in Embodiment 1 according to this application;
FIG. 4 is an example diagram of a structure of an embodiment of an optical fiber connector component in Embodiment 1 according to this application;
FIG. 5 is an example diagram of a structure of an embodiment of a label module in Embodiment 1 according to this application;
FIG. 6 is an example diagram of a structure of another embodiment of a label module in Embodiment 1 according to this application;
FIG. 7 is an example diagram of an application scenario of an optical fiber connector component in Embodiment 1 according to this application;
FIG. 8 is an example diagram of an application scenario of a label system in Embodiment 1 according to this application;
FIG. 9 is an example diagram of a partial structure of an embodiment of a label system in Embodiment 1 according to this application;
FIG. 10 is an example diagram of a partial structure of another embodiment of a label system in Embodiment 1 according to this application;
FIG. 11 is an example diagram of a partial structure of another embodiment of a label system in Embodiment 1 according to this application;
FIG. 12 is an example diagram of a partial structure of another embodiment of a label system in Embodiment 1 according to this application;
FIG. 13 is an example diagram of a partial structure of another embodiment of a label system in Embodiment 1 according to this application;
FIG. 14 is an example diagram of a partial structure of another embodiment of a label system in Embodiment 1 according to this application;
FIG. 15 is an example diagram of a structure of another embodiment of a label system in Embodiment 1 according to this application;
FIG. 16 is an example diagram of a partial structure of another embodiment of a label system in Embodiment 1 according to this application;
FIG. 17 is an example diagram of a partial structure of another embodiment of a label system in Embodiment 1 according to this application;
FIG. 18 is an example diagram of a structure of an embodiment of a label system in Embodiment 2 according to this application;
FIG. 19 is an example diagram of a structure of another embodiment of a label system in Embodiment 2 according to this application;
FIG. 20 is an example diagram of a structure of another embodiment of a cover plate in Embodiment 2 according to this application;
FIG. 21 is an example diagram of a structure of an embodiment of an optical fiber connector component in Embodiment 2 according to this application;
FIG. 22 is an example diagram of a structure of another embodiment of an optical fiber connector component in Embodiment 2 according to this application;
FIG. 23 is an example diagram of a structure of another embodiment of an optical fiber connector component in Embodiment 2 according to this application;
FIG. 24 is an example diagram of a structure of another embodiment of an optical fiber connector component in Embodiment 2 according to this application;
FIG. 25 is an example diagram of a structure of another embodiment of an optical fiber connector component in Embodiment 2 according to this application;
FIG. 26 is an example diagram of a partial structure of another embodiment of a label system in Embodiment 2 according to this application;
FIG. 27 is an example diagram of a structure of an embodiment of an optical fiber connector component in Embodiment 3 according to this application;
FIG. 28 is an example diagram of a structure of another embodiment of an optical fiber connector component in Embodiment 3 according to this application;
FIG. 29 is an example diagram of a structure of an embodiment of an optical fiber connector component in Embodiment 4 according to this application;
FIG. 30 is an example diagram of a structure of another embodiment of an optical fiber connector component in Embodiment 4 according to this application;
FIG. 31 is an example diagram of a structure of another embodiment of an optical fiber connector component in Embodiment 4 according to this application;
FIG. 32 is an example diagram of a structure of an embodiment of an optical fiber connector component in Embodiment 5 according to this application;
FIG. 33 is an example diagram of a structure of another embodiment of an optical fiber connector component in Embodiment 5 according to this application;
FIG. 34 is an example diagram of a structure of another embodiment of an optical fiber connector component in Embodiment 5 according to this application;
FIG. 35 is an example diagram of a structure of an embodiment of an optical fiber connector component in Embodiment 6 according to this application;
FIG. 36 is an example diagram of a structure of another embodiment of an optical fiber connector component in Embodiment 6 according to this application;
FIG. 37 is an example diagram of a structure of another embodiment of an optical fiber connector component in Embodiment 6 according to this application;
FIG. 38 is an example diagram of a structure of another embodiment of an optical fiber connector component in Embodiment 6 according to this application;
FIG. 39 is an example diagram of a structure of another embodiment of an optical fiber connector component in Embodiment 6 according to this application;
FIG. 40 is an example diagram of a partial structure of an embodiment of an optical fiber connector component in Embodiment 7 according to this application;
FIG. 41 is an example diagram of a partial structure of another embodiment of an optical fiber connector component in Embodiment 7 according to this application;
FIG. 42 is an example diagram of a structure of an embodiment of an optical fiber connector component in Embodiment 7 according to this application;
FIG. 43 is an example diagram of an exploded structure of an embodiment of an optical fiber connector component in Embodiment 7 according to this application;
FIG. 44 is an example diagram of a structure of an embodiment of an optical fiber connector component in Embodiment 7 according to this application;
FIG. 45 is an example diagram of a structure of another embodiment of an optical fiber connector component in Embodiment 7 according to this application;
FIG. 46 is an example diagram of a structure of another embodiment of an optical fiber connector component in Embodiment 7 according to this application;
FIG. 47 is an example diagram of a structure of another embodiment of an optical fiber connector component in Embodiment 7 according to this application;
FIG. 48 is an example diagram of a cross-section structure of another embodiment of an optical fiber connector component in Embodiment 7 according to this application;
FIG. 49 is an example diagram of a partial structure of an embodiment of an optical fiber connector component in Embodiment 8 according to this application;
FIG. 50 is an example diagram of a structure of an embodiment of an optical fiber connector component in Embodiment 8 according to this application;
FIG. 51 is an example diagram of a structure of another embodiment of an optical fiber connector component in Embodiment 8 according to this application;
FIG. 52 is an example diagram of a structure of another embodiment of an optical fiber connector component in Embodiment 8 according to this application;
FIG. 53 is an example diagram of a partial structure of an embodiment of an optical fiber connector component in Embodiment 9 according to this application;
FIG. 54 is an example diagram of an exploded structure of an embodiment of an optical fiber connector component in Embodiment 9 according to this application;
FIG. 55 is an example diagram of a structure of an embodiment of an optical fiber connector component in Embodiment 9 according to this application;
FIG. 56 is an example diagram of a structure of another embodiment of an optical fiber connector component in Embodiment 9 according to this application;
FIG. 57 is an example diagram of a structure of another embodiment of an optical fiber connector component in Embodiment 9 according to this application;
FIG. 58 is an example diagram of a partial cross-section structure of an embodiment of an optical fiber connector component in Embodiment 9 according to this application;
FIG. 59 is an example diagram of a structure of an embodiment of an optical fiber connector component in Embodiment 10 according to this application; and
FIG. 60 is a flowchart of steps in an embodiment of an identification method in Embodiment 11 according to this application.

### DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by persons of ordinary skill in the art based on embodiments of the present invention without creative efforts shall fall within the protection scope of the present invention.

This application provides a label system. Based on the label system provided in this application, whether an optical fiber connector body has been inserted into a corresponding adapter can be accurately and efficiently identified, thereby effectively ensuring accurate transmission of an optical signal. To better understand the label system provided in this application, the following first describes an optical network system to which the label system is applied.

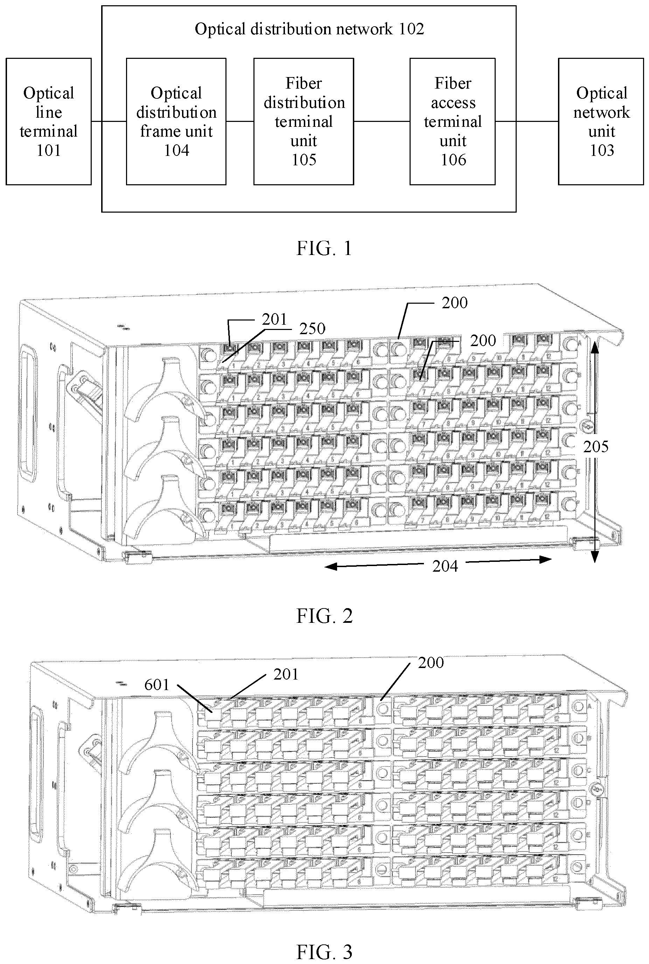

As shown in FIG. 1, FIG. 1 is an example diagram of a structure of an embodiment of an optical network according to this application. As shown in FIG. 1, an example in which the label system is applied to a passive optical network (PON) system is used for description in this application.

The PON system includes an optical line terminal (OLT) 101. The OLT 101 is configured to provide a network-side interface for an optical access network (OAN). The OLT 101 is connected to a network-side device at an upper layer (such as a switch or a router), and is connected to one or more optical distribution networks (ODNs) 102 at a lower layer.

The ODN 102 includes a passive optical splitter used for optical power distribution, and a trunk optical cable connected between the passive optical splitter and the OLT 101. The trunk optical cable is configured to transmit an optical signal between the OLT 101 and the ODN 102. The ODN 102 further includes a branch optical cable connected between the passive optical splitter and an optical network unit (ONU) 103. The branch optical cable is configured to transmit an optical signal between the ODN 102 and the ONU 103.

When the OLT 101 needs to transmit a downlink optical signal to the ONU 103, the ODN 102 transmits the downlink optical signal from the OLT 101 to each ONU via the passive optical splitter. Similarly, when the ONU 103 needs to transmit an uplink optical signal to the OLT 101, the ODN converges the uplink optical signal from the ONU 103 and transmits the uplink optical signal to the OLT 101.

The ONU 103 provides a user-side interface for the OAN and is connected to the ODN 102. If the ONU 103 further provides a user port function, for example, the ONU provides an Ethernet user port or a plain old telephone service (POTS) user port, the ONU 103 is referred to as an optical network termination (ONT). In this application, the ONU or the ONT is collectively referred to as an optical network unit ONU.

To implement optical signal transmission, an optical cable output from the OLT 101 is connected to an optical distribution frame (ODF) unit 104 included in the ODN 102. The ODF unit 104 may include one or more ODF s.

Through distribution of the ODF unit 104, the output optical cable is connected to a fiber distribution terminal (FDT) unit 105. The FDT unit 105 may include one or more FDTs.

The FDT unit 105 is configured to perform secondary distribution on optical cables. A management range of one FDT unit 105 may be one cell or one street, and a specific quantity of optical fiber connector components connected to the FDT unit 105 may be selected based on a quantity of users who need to be managed by the FDT unit 105.

The FDT unit 105 is connected to a fiber access terminal (FAT) unit 106 through an optical cable. The FAT unit 106 includes one or more FATs.

The FAT unit 106 is connected to the ONU 103, where the FAT unit 106 is a user access point configured to connect a drop optical cable, and the drop optical cable refers to a section of optical cable from the FAT unit 106 to a house of a user

A subrack provided in this application may be used for fiber patch cord connection or pigtail connection scenarios of ODF and FDT cabinets. This is not specifically limited. Combined with an optical fiber connector component, quick recording and inspection of adapters in the ODF and FDT cabinets can be realized. A correspondence between an adapter and an optical fiber connector component is digitally managed, to improve operation and maintenance efficiency.

This application is described by using an example in which the optical fiber connector component is applied to a fiber patch cord, and two ends of the fiber patch cord are connected between different subracks of a same ODF.

The two ends of the fiber patch cord are respectively connected to a first optical fiber connector component and a second optical fiber connector component. It can be learned that the first optical fiber connector component and the second optical fiber connector component are connected to different adapters of a same ODF, for example, an adapter A and an adapter B.

When the first optical fiber connector component of the fiber patch cord is accurately inserted into the adapter A and the second optical fiber connector of the fiber patch cord is accurately inserted into the adapter B, transmission of the optical signal via the fiber patch cord is effectively ensured.

If the first optical fiber connector component is not inserted into the adapter A, and/or the second optical fiber connector is not inserted into the adapter B, transmission of the optical signal cannot be implemented via the fiber patch cord.

However, by using the label system provided in this application, efficiency and accuracy of identifying whether the optical fiber connector component is accurately inserted into the corresponding adapter can be effectively improved. The label system provided in this application has a plurality of implementation embodiments. For better understanding, the following describes embodiments one by one.

It should be noted that embodiments are merely intended for describing the technical solutions of the present invention other than limiting the present invention. Although the present invention is described in detail with reference to the following embodiments, persons of ordinary skill in the art should understand that they may still make modifications to the technical solutions described in the following embodiments or make equivalent replacements to some technical features thereof, without departing from the scope of the technical solutions of embodiments of the present invention.

### Embodiment 1

First, with reference to FIG. 2 and FIG. 3, a label system provided in this application includes a network node, the network node includes a subrack 200, and a plurality of adapters, for example, an adapter 201 in the figure, are fixed to the subrack 200.

The subrack 200 shown in this embodiment may be a high-density subrack, where the high-density subrack means that a plurality of optical fiber connector components are inserted in a unit area of a subrack panel and a gap between adjacent optical fiber connector components is small. The following describes an arrangement manner of the high-density subrack.

The plurality of adapters included in the subrack 200 form an adapter array, the adapter array includes N rows of adapters arranged along a horizontal direction 204 of the subrack 200, and the adapter array further includes M columns of adapters arranged along a vertical direction 205 of the subrack 200. The horizontal direction 204 and the vertical direction 205 are perpendicular to each other, and specific values of M and N are not limited in this embodiment.

It can be learned that in the high-density subrack, a gap between adjacent optical fiber connectors is small. Consequently, a process of identifying each optical fiber connector component is susceptible to interference from another optical fiber connector component, leading to a failure to accurately identify each optical fiber connector component. However, the label system shown in this embodiment is used, and in an identification process, interference from another optical fiber connector component is not caused, thereby improving accuracy of identifying each optical fiber connector component. The following describes a specific structure of the optical fiber connector component 203 shown in this embodiment.

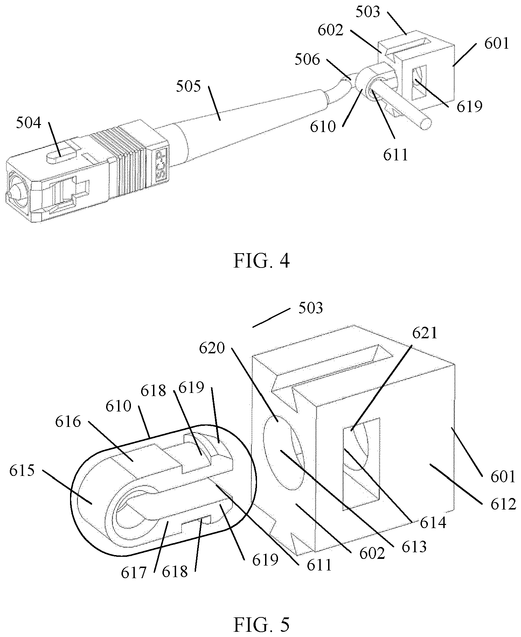

The following describes the structure of the optical fiber connector component with reference to FIG. 4 to FIG. 6.

The optical fiber connector component includes an optical fiber connector body and a label module 503. Specifically, the label module 503 and the optical fiber connector body shown in this embodiment are two independent devices. When the optical fiber connector component needs to be identified via the label module 503, the label module 503 may be connected to an optical cable connected to the optical fiber connector body.

The adapter 201 shown in this embodiment has a jack, and the jack is configured to insert and fix the optical fiber connector body. In a state in which the optical fiber connector body is inserted into the adapter 201, optical signal interaction may be performed between the optical fiber connector body and the network node.

Specifically, the optical fiber connector body includes a plug 504, an intermediate piece 512, and a rear retainer 505. The intermediate piece 512 is connected between the plug 504 and the rear retainer 505, and the rear retainer 505 is connected to an optical cable 506. The optical cable 506 is connected to an optical cable located inside the optical fiber connector body 501, to implement optical signal transmission. The plug 504 is configured to be inserted into the adapter, to implement a connection between the optical fiber connector component 500 and the adapter.

A type of the optical fiber connector body in this embodiment is not limited. For example, the type of the optical fiber connector body shown in this embodiment is any one of the following:
a ferrule connector (FC)-type optical fiber connector, a square connector (SC)-type optical fiber connector, a lucent connector (LC)-type optical fiber connector, a straight tip (ST)-type optical fiber connector, a fiber distributed data interface (FDDI)-type optical fiber connector, or the like.

The following describes the label module 503 shown in this embodiment.

The label module 503 shown in this embodiment is configured to indicate the optical fiber connector body. Specifically, the label module 503 has a target surface 601, the target surface 601 is configured to set label information, and the label information is used to identify the optical fiber connector body.

In this embodiment, the label information used to identify the optical fiber connector body is set on the target surface 601. The label information is not limited in this embodiment provided that the label information can uniquely identify the optical fiber connector body. That is, different label information is used to identify different optical fiber connector bodies. For example, the label information may be a two-dimensional code, a unique identifier, a bar code, or digital text information used to uniquely identify the optical fiber connector body.

The following describes a position of the target surface 601 shown in this embodiment. It should be clearly stated that descriptions of the position of the target surface 601 in this embodiment are an optional example, and are not limited provided that the target surface 601 is within a visual range or a capturing range.

When the label module 503 is connected at a position close to the rear retainer 505, the target surface 601 is opposite to a surface of the subrack 200.

Specifically, the label module 503 shown in this embodiment has an inner surface 602. The inner surface 602 is disposed opposite to the surface of the subrack 200, that is, the inner surface 602 is disposed facing the surface of the subrack 200. The target surface 601 and the inner surface 602 are two side surfaces of the label module 503 that are opposite to each other. It can be learned from further descriptions about an angle of direction that the inner surface 602 faces inward relative to the surface of the subrack 200 and the target surface 601 faces outward relative to the surface of the subrack 200.

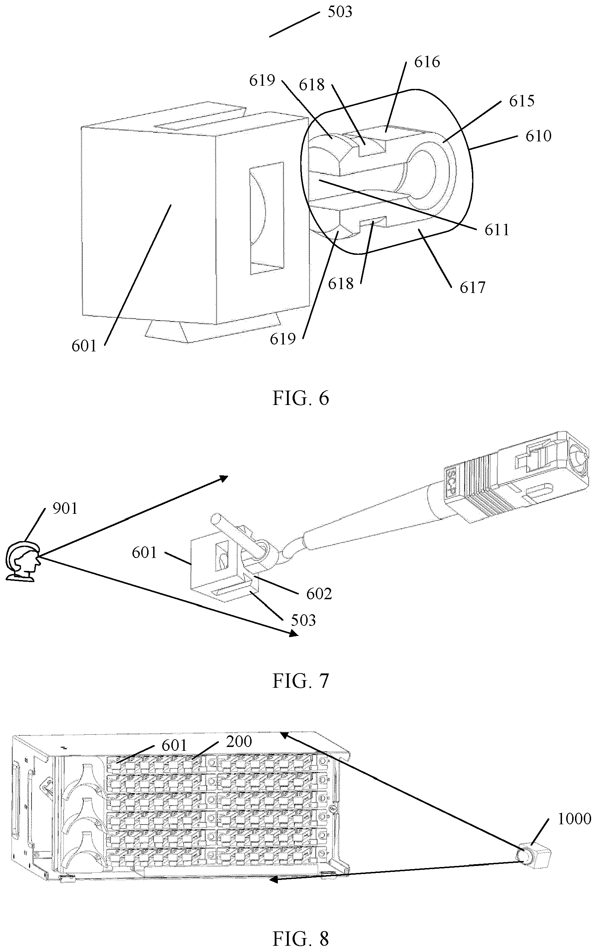

To better understand a position relationship indicating that the target surface 601 is opposite to the surface of the subrack 200, the following is described with reference to FIG. 7.

As shown in FIG. 7, if the label module 503 is located within a visual range of a human eye 901, the target surface 601 facing outward is a surface visible to the human eye 901, and the inner surface 602 facing inward is a surface invisible to the human eye 901.

It can be learned that, in a state in which the optical fiber connector component is inserted on the surface of the subrack 200, the target surface 601 is opposite to the surface of the subrack 200.

In this embodiment, if the entire subrack 200 is within the visual range of the human eye 901, a target surface of each optical fiber connector component inserted into the subrack 200 is within the visual range of the human eye 901.

An example in which the target surface 601 is within the visual range of the human eye 901 is used above for description. The target surface 601 shown in this embodiment is further within a capturing range of a camera.

As shown in FIG. 8, if the surface of the subrack 200 is within a capturing range of a camera 1000, specifically, if the optical fiber connector component is not inserted into the subrack 200, the camera 1000 captures the surface of the subrack 200, and an obtained target image includes each adapter included in the subrack 200.

If one or more optical fiber connector components have been inserted into the subrack 200, the camera 1000 captures the surface of the subrack 200, and an obtained target image can entirely and clearly capture label information set on each target surface 601.

It can be learned from the foregoing descriptions that the target surface 601 shown in this embodiment is within the visual range of the human eye and/or within the capturing range of the camera. The following uses an example in which the target surface 601 shown in this embodiment is within the range of the camera as an example for description.

To ensure that the target surface 601 is within the capturing range of the camera, in this embodiment, the target surface 601 is parallel to the surface of the subrack 200 (as shown in FIG. 8). In another example, an included angle between the target surface 601 and the surface of the subrack 200 may alternatively be an obtuse angle. A specific angle is not limited in this embodiment provided that the target surface 601 is within the capturing range.

It should be clearly stated that in this embodiment, an example in which the target surface 601 is a planar structure is used for description. In another example, the target surface 601 may alternatively be a curved surface or in any other shape provided that the label information set on the target surface 601 is within the capturing range.

By using the label system shown in this embodiment, whether the optical fiber connector body identified by the label is inserted into the corresponding adapter can be further identified. An implementation process is described below.

The following continues to provide descriptions with reference to FIG. 2, FIG. 3, and FIG. 9.

The label system further includes an indication part 250. Specifically, the label system shown in this embodiment includes a plurality of indication part 250, and a quantity of indication part 250 included in the label system and a quantity of adapters included in the label system are equal and are in a one-to-one correspondence.

A first end of the indication part 250 is connected to the subrack 200 and close to the adapter.

In this embodiment, an example in which the indication part 250 is connected to a lower part of the adapter 201 is used for description. In another example, the indication part 250 is alternatively connected to an upper part of the adapter 201, the indication part 250 is connected to a right part of the adapter 201, or the indication part 250 is connected to a left part of the adapter 201. This is not specifically limited in this embodiment.

A second end of the indication part 250 has an indication surface 251, the indication surface 251 is configured to set identification information, and the identification information is used to identify the adapter 201 into which the optical fiber connector component is inserted.

In this embodiment, a type of the identification information is not limited provided that the identification information can uniquely identify the adapter. For example, the identification information may be a two-dimensional code, a unique identifier, a bar code, or digital text information.

The identification information shown in this embodiment is within the visual range or the capturing range. For specific descriptions that the identification information is within the visual range or the capturing range, refer to the foregoing descriptions that the label information is within the visual range or the capturing range. Details are not described again.

In this embodiment, to identify whether the adapter into which the optical fiber connector body identified by the label information should be inserted is the adapter identified by the identification information, the label information located on the target surface 601 and the identification information located on the indication surface 251 shown in this embodiment need to meet a preset condition. In this case, the label information and the identification information that meet the preset condition may be identified.

The following describes the preset condition by using an example. In other words, the preset condition shown in this embodiment may be a condition 1 and a condition 3 shown below, or may be a condition 1 and a condition 2 shown below, or may be a condition 1, a condition 2, and a condition 3 shown below.

### Condition 1

The condition 1 is that a distance between the identification information and the label information is less than or equal to a first preset value. Specifically, when a distance between the label information located on the target surface 601 and the identification information located on the indication surface 251 is less than or equal to the first preset value, it is determined that the label information and the identification information meet the condition 1.

In this embodiment, a specific size of the first preset value is not limited provided that the identification information and the label information that meet the condition 1 are close enough when the distance between the identification information and the label information is less than or equal to the first preset value.

### Condition 2

The condition 2 is that a distance between the label information and the identification information is less than or equal to a distance between the label information and any identification information included in the subrack.

For example, the subrack includes identification information A, identification information B, identification information C, and identification information D. If a distance between the label information and the identification information A is a smallest value of the distance between the label information and the identification information A, a distance between the label information and the identification information B, a distance between the label information and the identification information C, and a distance between the label information and the identification information D, the label information and the identification information A meet the condition 2.

### Condition 3

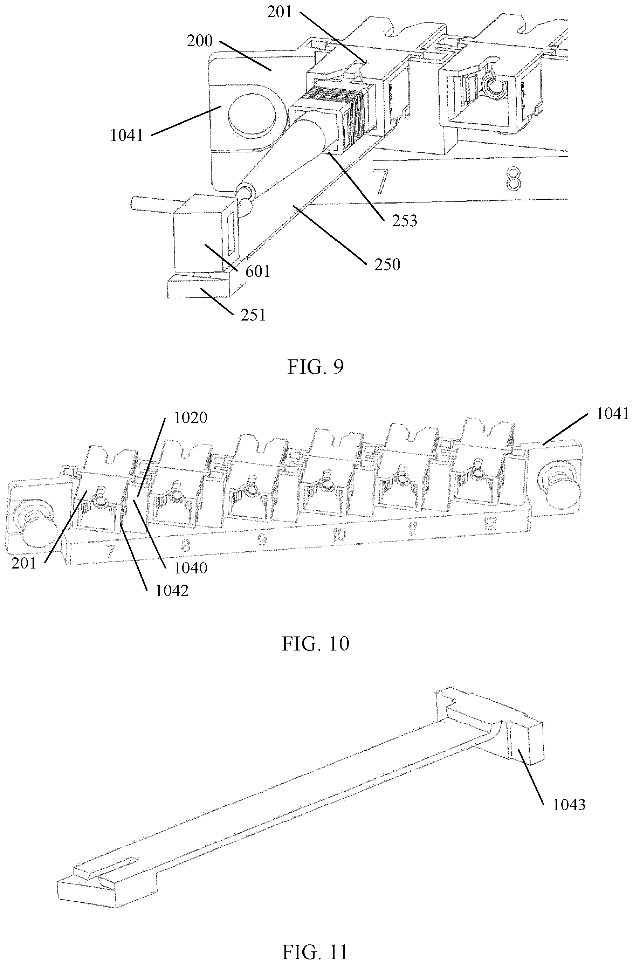

The condition 3 is that the identification information is located in a target orientation of the label information. For example, the target orientation shown in this embodiment is on a lower part, that is, the identification information that meets the condition 3 is located below the label information (as shown in FIG. 9). It should be clearly stated that the descriptions of the target orientation in this embodiment are an optional example, and are not limited.

When the label information and the identification information meet the preset condition, the label information and the identification information have a uniform direction, so that the label information and the identification information are within the capturing range at the same time. That the label information and the identification information that meet the preset condition have a uniform direction is described in this embodiment below.

Optionally, the label information and the identification information that meet the preset condition are located on a same surface, and the same surface may be a planar structure, a curved structure, a concave-convex structure, or the like. This is not specifically limited provided that the label information and the identification information that meet the preset condition and that are located on the same surface are within the visual range or the capturing range at the same time.

Optionally, both the label information and the identification information that meet the preset condition have a same direction, so that the label information and the identification information that meet the preset condition are within the capturing range or the visual range.

Continue to refer to FIG. 9. When the camera captures the subrack to obtain a target image, because the label information and the identification information are within the capturing range, it is effectively ensured that the target image includes the label information and the identification information.

An electronic apparatus (for example, a processor in a smartphone, a tablet computer, a computer, or a network node) analyzes the target image to determine that the label information located on the target surface 601 and the identification information located on the indication surface 251 meet the preset condition. The electronic apparatus queries a target adapter corresponding to the label information, where the target adapter is, to implement successful transmission of an optical signal, an adapter into which the optical fiber connector body identified by the label information needs to be inserted.

Subsequently, the electronic apparatus may determine whether the adapter identified by the identification information is the same as the target adapter. If the adapter identified by the identification information is the same as the target adapter, it indicates that the adapter connected to the optical fiber connector body identified by the identification information is a correct adapter. That is, the optical fiber connector body identified by the label information and the adapter identified by the identification information are paired, and optical signal transmission can be implemented via the optical fiber connector body and the adapter that are paired.

If the adapter identified by the identification information is not the same as the target adapter, it indicates that the adapter connected to the optical fiber connector body identified by the identification information is an incorrect adapter. That is, the optical fiber connector body identified by the label information and the adapter identified by the identification information are not paired, and optical signal transmission cannot be implemented via the optical fiber connector body and the adapter that are not paired.

It can be learned that by using the label system shown in this embodiment, whether the optical fiber connector body identified by the label information is connected to an accurate adapter can be directly identified by using the target image, and identification is not performed in a manual manner or by using a dedicated identification apparatus, thereby improving identification accuracy and efficiency.

In this embodiment, to ensure that the label information is always within the capturing range, and avoid a case in which the label information is no longer within the capturing range due to a change of a position of the label information, and thus the label information cannot be identified, the second end of the indication part 250 shown in this embodiment is connected to the label module 503.

Specifically, a first sub-piece is disposed on a surface of the second end of the indication part 250 facing the label module 503, a second sub-piece is disposed on a surface of the label module 503 facing the second end of the indication part 250, and in a state in which the first sub-piece is connected to the second sub-piece, the second end of the indication part 250 is connected to the label module 503.

As shown in FIG. 9, the first sub-piece is disposed on an upper surface of the second end of the indication part 250, and the second sub-piece is disposed on a lower surface of the label module 503.

Specific structures of the first sub-piece and the second sub-piece are not limited in this embodiment provided that the second end of the indication part 250 is connected to the label module 503 by connecting the first sub-piece and the second sub-piece. The first sub-piece and the second sub-piece in this embodiment may be connected in one or more of the following connection manners:

### Manner 1

The first sub-piece is a clamping protrusion, the second sub-piece is a clamping groove, and in a state in which the clamping protrusion is inserted into the clamping groove, the connection between the first sub-piece and the second sub-piece is implemented.

### Manner 2

The first sub-piece is a clamping groove, the second sub-piece is a clamping protrusion, and in a state in which the clamping protrusion is inserted into the clamping groove, the connection between the first sub-piece and the second sub-piece is implemented.

### Manner 3

The first sub-piece is a dovetail, the second sub-piece is a dovetail groove, and in a state in which the dovetail is inserted into the dovetail groove, the connection between the first sub-piece and the second sub-piece is implemented.

### Manner 4

The first sub-piece is a dovetail groove, the second sub-piece is a dovetail, and in a state in which the dovetail is inserted into the dovetail groove, the connection between the first sub-piece and the second sub-piece is implemented.

### Manner 5

The first sub-piece is a clip, the second sub-piece is a clip slot, and in a state in which the clip is clamped and fixed in the clip slot, the connection between the first sub-piece and the second sub-piece is implemented.

### Manner 6

The first sub-piece is a clip slot, the second sub-piece is a clip, and in a state in which the clip is clamped and fixed in the clip slot, the connection between the first sub-piece and the second sub-piece is implemented.

### Manner 7

The first sub-piece is a first magnetic piece, the second sub-piece is a second magnetic piece, a magnetic pole of the first magnetic piece is different from a magnetic pole of the second magnetic piece, and in a state in which the first magnetic piece and the second magnetic piece are attracted and fixed, the connection between the first sub-piece and the second sub-piece is implemented.

The following describes a connection manner between the indication part 250, the adapter 201, and the subrack 200.

The subrack 200 shown in this embodiment includes a fixing base, the fixing base is configured to insert and fix the adapter 201, and the fixing base shown in this embodiment is inserted into or fixed to a panel of the subrack 200.

For better understanding, the following describes examples with reference to three optional structures of the fixing base. It should be clearly stated that the descriptions of the structure of the fixing base in this embodiment are an optional example, and are not limited provided that the fixing base can fix the adapter 201 to the subrack 200.

### Optional structure 1

The fixing base shown in this example may be a first fixing base 1020 shown in FIG. 10 to FIG. 13.

The subrack 200 shown in this embodiment may include an insertion board 1041, the insertion board 1041 is fixedly connected to the subrack 200, and all insertion boards 1041 included in the subrack 200 form a panel of the subrack 200.

One or more first fixing bases 1020 are disposed on the insertion board 1041. In this embodiment, an example in which a plurality of first fixing bases 1020 arranged in rows are disposed on the insertion board 1041 is used. In another example, a plurality of first fixing bases 1020 arranged in columns may alternatively disposed on the insertion board 1041.

The first fixing base 1020 includes an insertion groove 1042, and the insertion groove 1042 is configured to insert and fix the first end of the indication part 250.

Specifically, the first end of the indication part 250 is formed with an insertion protrusion 1043. In a state in which the insertion protrusion 1043 is inserted into the insertion groove 1042, the first end of the indication part 250 is fixed on the first fixing base 1020.

It should be clearly stated, in this embodiment, the connection between the first end of the indication part 250 and the first fixing base 1020 in a manner of insertion is an optional example. In another example, the first end of the indication part 250 may be alternatively connected to the first fixing base 1020 in any manner such as a clamping connection or a magnetic connection.

A groove wall of the insertion groove 1042 of the first fixing base 1020 extends in a direction perpendicular to an insertion surface 1044 to form a first abutting groove 1040. The insertion surface 1044 is a surface on which the insertion protrusion 1043 is connected to a groove bottom of the insertion groove 1042 in a state in which the insertion protrusion 1043 is inserted into the insertion groove 1042. The adapter 201 is inserted into the first abutting groove 1040.

It can be learned that, in this example, the indication part 250, the adapter 201, and the first fixing base 1020 are detachably connected.

### Optional structure 2

The fixing base shown in this example is a second fixing base. For descriptions of a connection manner between the second fixing base and the subrack shown in this embodiment, refer to the optional structure 1. Details are not described again.

The second fixing base shown in this embodiment includes a second abutting groove. For descriptions of a specific structure of the second abutting groove, refer to the descriptions of the first abutting groove shown in the optional structure 1. Details are not described in this embodiment.

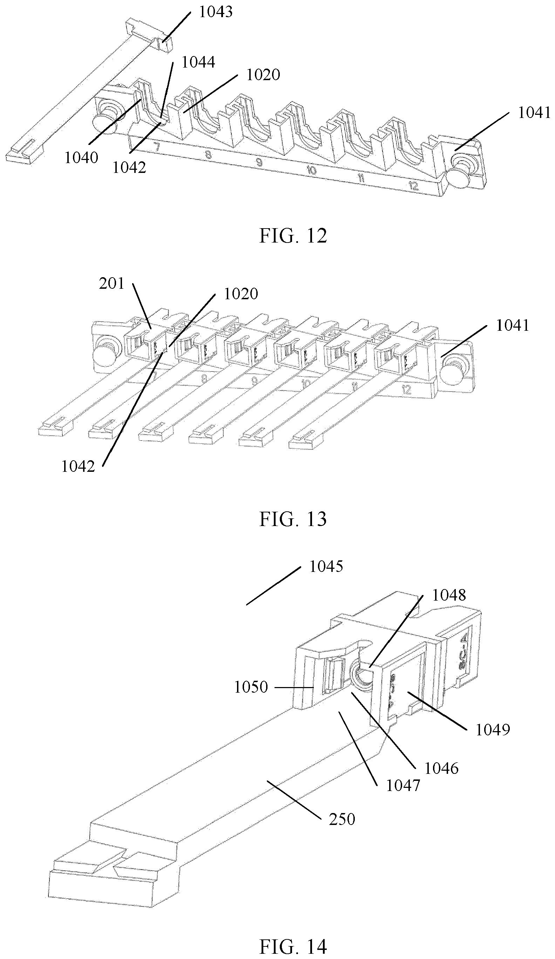

The second abutting groove shown in this embodiment is inserted into and fixed to the adapter 1045 shown in FIG. 14, and at least a part of a side wall of a jack 1046 of the adapter 1045 extends in a direction away from the jack 1046 to form the indication part 250.

An example in which the jack 1046 shown in this embodiment has four side walls, namely, a bottom side wall 1047, a top side wall 1048, a right side wall 1049, and a left side wall 1050 is used. The bottom side wall 1047, the top side wall 1048, the right side wall 1049, and the left side wall 1050 connected to each other are surrounded to form the jack 1046.

In this embodiment, an example in which the bottom side wall 1047 extends in a direction away from the jack 1046 to form the indication part 250 is used for description. In another example, at least one of the bottom side wall 1047, the top side wall 1048, the right side wall 1049, and the left side wall 1050 may alternatively extend in a direction away from the jack 1046 to form the indication part.

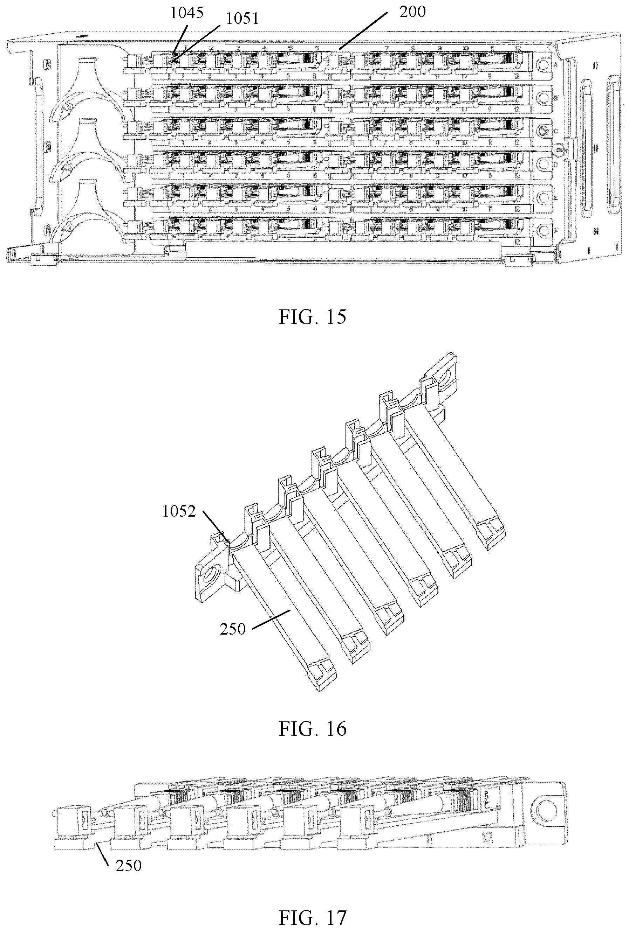

With reference to FIG. 14 and FIG. 15, the optical fiber connector component 1051 is inserted into the adapter 1045 via the jack 1046.

It can be learned that, in this example, the indication part 250 and the adapter 1045 are integrally formed.

### Optional structure 3

The fixing base shown in this example is a third fixing base. For descriptions of a connection manner between the third fixing base and the subrack shown in this embodiment, refer to the optional structure 1. Details are not described again.

In this example, with reference to FIG. 16 and FIG. 17, the third fixing base includes a third abutting groove 1052, and the third abutting groove 1052 is configured to insert and fix the adapter. For descriptions of a structure of the third abutting groove, refer to the foregoing optional structure 1. Details are not described again.

An outer wall of the third abutting groove 1052 extends in a direction away from the third abutting groove 1052 to form the indication part 250.

It can be learned that, in this example, the indication part 250 and the third fixing base are integrally formed.

Optionally, the label information shown in this embodiment may be set on the target surface 601 at delivery of the optical fiber connector component, or optionally, the label information may be set on the target surface 601 when the optical fiber connector component is subsequently used.

For a manner of setting the identification information shown in this embodiment on the indication surface 251, refer to the descriptions of setting the label information on the target surface 601. Details are not described again.

The following describes a connection manner between the label module 503 and the optical cable 506 shown in this embodiment.

With reference to FIG. 4 to FIG. 6, the label module 503 shown in this embodiment includes a hanging piece 610 and a label body 612 that are connected to each other, and the label body 612 has the target surface 601 and the inner surface 602.

A channel 611 is formed between the hanging piece 610 and the inner surface 602. The optical cable 506 passes through the channel 611, to implement a connection between the label module 503 and the optical cable 506.

A rotation through hole 613 is disposed on the inner surface 602, rotation space 614 is disposed inside the label body 612, and the rotation space 614 is in communication with the rotation through hole 613.

The hanging piece 610 includes a hanging piece body 615 and a first rotation arm 616 and a second rotation arm 617 that are connected to both ends of the hanging piece body 615. A rotation groove 618 is disposed on each of the first rotation arm 616 and the second rotation arm 617. An end of the rotation groove 618 away from the hanging piece body 615 forms an abutting protrusion 619.

The rotation through hole 613 includes a first aperture 620 and a second aperture 621, and the first aperture 620 and the second aperture 621 are opposite to each other along an axial position of the rotation through hole 613. Both the first aperture 620 and the second aperture 621 are in communication with the rotation through hole 613.

The rotation groove 618 is inserted into the rotation through hole 613 via the first aperture 620, and the abutting protrusion 619 abuts against an outer peripheral edge of the second aperture 621. The outer peripheral edge of the second aperture 621 is located inside the rotation space 614, so that the rotation groove 618 rotates within the rotation through hole 613.

It can be learned that, as shown in this manner, the channel 611 is formed between the hanging piece body 615 and the inner surface 602, and the optical cable 506 passes through the channel 611 to implement the connection between the label module 503 and the optical cable 506.

It should be clearly stated the descriptions of the connection manner between the hanging piece 610 and the label body 612 shown in this embodiment are an optional example, and are not limited. For example, any manner such as a magnetic connection manner, an elastic connection manner, or a bonding manner may alternatively be used between the hanging piece 610 and the label body 612.

Specifically, the magnetic connection manner may be that the hanging piece 610 is a metal piece, and the label body 612 is a magnet, so that in a state in which the hanging piece 610 and the label body 612 are attracted to each other for the connection, to implement the connection between the hanging piece 610 and the label body 612.

The elastic connection manner may be that the first rotation arm 616 and the second rotation arm 617 of the hanging piece 610 are made of elastic materials, a first jack is disposed at a position, of a second surface of the label body 612, corresponding to the first rotation arm 616, and a second jack is disposed at a position, of the second surface of the label body 612, corresponding to the second rotation arm 617, when the first rotation arm 616 is inserted into the first jack, the first rotation arm 616 and the first jack are in a tight fit, and when the second rotation arm 617 is inserted into the second jack, the second rotation arm 617 and the second jack are in a tight fit, to implement the connection between the hanging piece 610 and the label body 612.

The bonding manner may be that an adhesive layer is disposed between the first rotation arm 616 and the second surface, and an adhesive layer is also disposed between the second rotation arm 617 and the second surface, so that the connection between the hanging piece 610 and the label body 612 is implemented by using the adhesive layer.

By using the label system shown in this embodiment, the label information and the identification information that meet the preset condition can be obtained by capturing the subrack, and whether the optical fiber connector body identified by the label information and the adapter identified by the identification information are paired can be directly determined. It can be learned that by using the label system shown in this embodiment, whether the optical fiber connector body identified by the label information is connected to an accurate adapter can be directly identified by using the target image, and identification is not performed in a manual manner or by using a dedicated identification apparatus, thereby improving identification accuracy and efficiency.

In the label system shown in this embodiment, target surfaces of different label modules and indication surfaces of different indication parts are within a visual range or a capturing range and do not overlap with each other, to effectively avoid mutual interference, winding, and the like between different label modules, between different indication parts, and between label modules and indication parts, and reduce difficulty of maintaining the label system.

In addition, there is no mutual blocking between different label information, between different identification information, and between different label information and identification information shown in this embodiment, and the optical fiber connector body does not block the label information and/or the identification information, to effectively improve efficiency and accuracy of identifying whether the optical fiber connector body and the adapter are paired.

Each label information and each identification information included in the target image and the label information and the identification information that meet the preset condition are identified by using an image identification technology, automatic recording of the adapter into which the optical fiber connector body has been inserted can be implemented, and recording and statistics of each optical fiber connector body inserted into the subrack and an adapter into which the optical fiber connector body has been inserted can be implemented, to improve efficiency of managing resources of the optical fiber connector body and resources of the adapter in the label system.

### Embodiment 2

In Embodiment 1, to implement identification of an adapter, an indication part 250 needs to be added to a label system. However, this embodiment provides a label system that is different from that in Embodiment 1 and that is used to identify the adapter

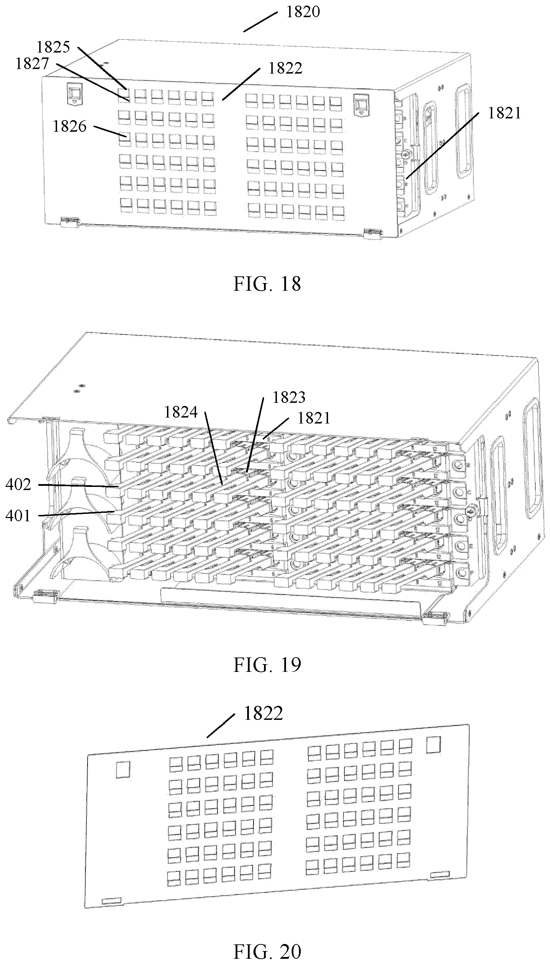

FIG. 18 shows an overall structure of a network node 1820 included in the label system provided in this embodiment. For a specific structure, refer to FIG. 19 and FIG. 20. FIG. 19 is an example diagram of a structure of a subrack 1821 included in the network node 1820. FIG. 20 is an example diagram of a structure of a cover plate 1822 included in the network node 1820.

A plurality of adapters 1823 are fixed to the subrack 1821 shown in this embodiment, and the adapters 1823 are configured to insert and fix an optical fiber connector component 1824. The following describes a structure of the optical fiber connector component 1824 shown in this embodiment. It should be clearly stated that descriptions of the structure of the optical fiber connector component in this embodiment are an optional example, and are not limited. For example, the optical fiber connector component shown in this embodiment may alternatively be that shown in Embodiment 1.

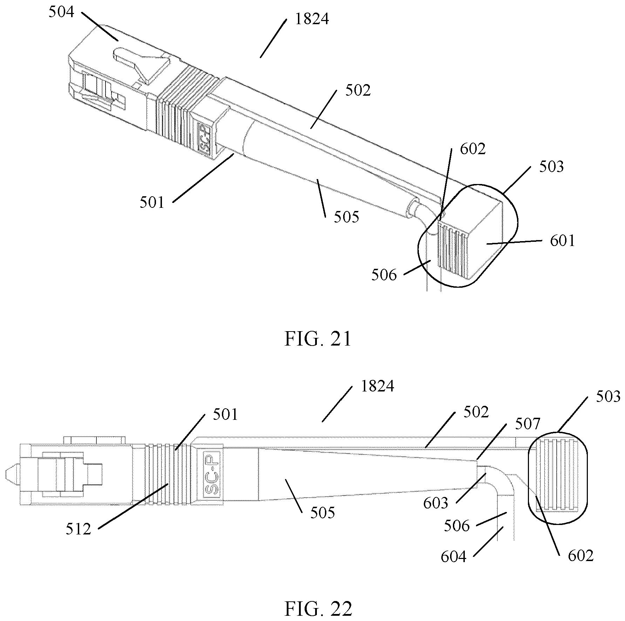

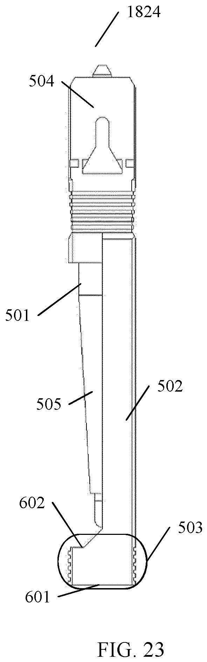

With reference to FIG. 21 to FIG. 23 and FIG. 25, the optical fiber connector component 1824 includes an optical fiber connector body 501, a connecting piece 502, and a label module 503.

Specifically, the optical fiber connector body 501 includes a plug 504, an intermediate piece 512, and a rear retainer 505. The intermediate piece 512 is connected between the plug 504 and the rear retainer 505, and the rear retainer 505 is connected to an optical cable 506. The optical cable 506 is connected to an optical cable located inside the optical fiber connector body 501, to implement optical signal transmission. The plug 504 is configured to be inserted into the adapter, to implement a connection between the optical fiber connector component 1824 and the adapter

Specifically, the connecting piece 502, the label module 503, and the plug 504 shown in this embodiment are integrally formed; the connecting piece 502, the label module 503, the plug 504, and the intermediate piece 512 are integrally formed; or the connecting piece 502, the label module 503, and the intermediate piece 512 are integrally formed.

The connecting piece 502 is separately connected to the optical fiber connector body 501 and the label module 503. Specifically, a first end of the connecting piece 502 is connected to the plug 504, and a second end of the connecting piece 502 is connected to the label module 503. In addition, the second end of the connecting piece 502 shown in this embodiment is located close to the rear retainer 505, and an accommodation channel 507 is formed between the plug 504, the connecting piece 502, and the label module 503. The accommodation channel 507 is configured to accommodate the rear retainer 505 and a part of the optical cable 506 connected to the rear retainer 505.

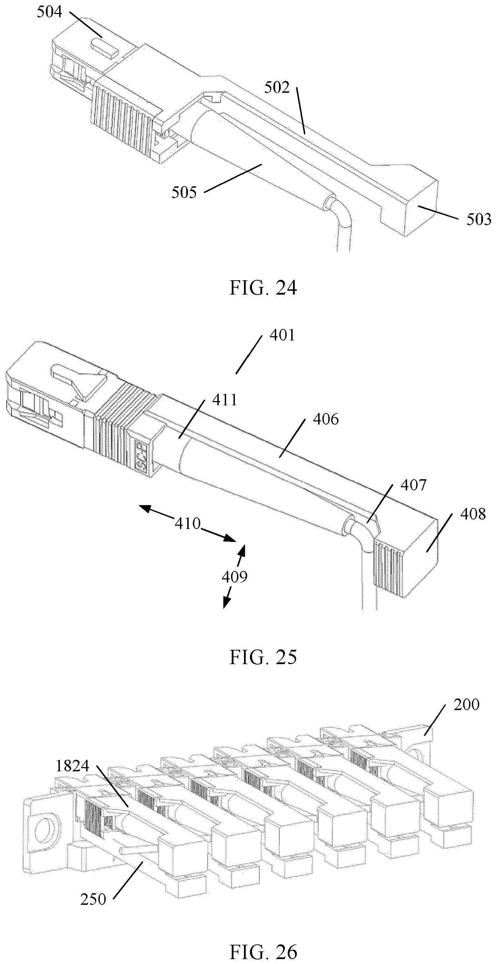

It should be clearly stated that, in this embodiment, an example in which the accommodation channel 507 is formed between the plug 504, the connecting piece 502, and the label module 503 is used for description. In another example, as shown in FIG. 24, the rear retainer 505 is not accommodated between the plug 504, the connecting piece 502, and the label module 503.

The label module 503 shown in this embodiment is configured to indicate the optical fiber connector body 501. Specifically, the label module 503 has a target surface 601, the target surface 601 is opposite to the optical fiber connector body 501, and the target surface 601 is configured to set label information. For specific descriptions of the label information, refer to Embodiment 1. Details are not described again.

For specific descriptions that the label information is within a capturing range and a visual range, refer to Embodiment 1. Details are not described again.

Because the label information located on the target surface 601 shown in this embodiment is used to uniquely identify the optical fiber connector body 501, the label information needs to be complete and clear, and the label information cannot be blocked within the capturing range. When the label information is blocked, and a camera cannot obtain clear and complete label information, the optical fiber connector body 501 identified by the label information cannot be accurately determined directly. However, the optical fiber connector component shown in this embodiment can effectively avoid blocking the label information. Specifically, in this embodiment, blocking of the label information may be avoided in the following two manners:

### Manner 1

The optical cable 506 connected to the rear retainer 505 is extended through guidance of the accommodation channel 507, the optical cable 506 has a first extension part 603 and a second extension part 604, and one end of the first extension part 604 is connected to the rear retainer 505, the other end of the first extension part 603 is connected to the second extension part 604, and the first extension part 603 extends axially along the optical fiber connector body 501 inside the accommodation channel 507. The first extension part 603 and the second extension part 604 have a specific included angle, so that the second extension part 604 can protrude from the accommodation channel 507. In addition, the first extension part 603 and the second extension part 604 both have a specific gap to an inner surface 602 of the label module 503, so that extension paths of the first extension part 603 and the second extension part 604 are isolated from the target surface 601. That is, extension paths of the first extension part 603 and the second extension part 604 are not coplanar with the target surface 601. It can be learned that within the capturing range, the optical cable 506 does not block the label information. Therefore, clarity and integrity of the label information obtained by the camera are effectively ensured.

### Manner 2

In this manner, when a plurality of optical fiber connector components are inserted into the subrack 1821, an optical cable connected to a first optical fiber connector component does not block label information of another optical fiber connector component, that is, a second optical fiber connector component, on the subrack 1821.

An example in which the first column in which the first optical fiber connector component 401 shown in FIG. 19 is located in an optical fiber connector component array is used for description. The optical fiber connector component array includes all optical fiber connector components inserted into the subrack. It should be clearly stated that in this embodiment, the descriptions of the position of the first optical fiber connector component 401 in the optical fiber connector component array are an optional example, and are not limited, that is, the first optical fiber connector component 401 may be at any position in the optical fiber connector component array.

The second optical fiber connector component shown in this embodiment means that a path of an optical cable connected to the second optical fiber connector component passes through the first optical fiber connector component 401. For example, the second optical fiber connector component 402 and the first optical fiber connector component 401 are located in a same row in the optical fiber connector component array. An example in which the second optical fiber connector component 402 is located on the right of the first optical fiber connector component 401 is used for description.

Optionally, in another example, the second optical fiber connector component 402 and the first optical fiber connector component 401 may alternatively be located in a same column in the optical fiber connector component array.

An outer wall of the connecting piece 406 of the first optical fiber connector component 401 shown in this embodiment is concave to form a cabling channel, and the cabling channel is used to avoid an extension direction of the optical cable connected to the second optical fiber connector component 402. A possibility of hard contact between the optical cable connected to the second optical fiber connector component 402 and the first optical fiber connector component 401 can be effectively avoided, and security of the optical cable connected to the second optical fiber connector component 402 can be effectively improved.

In this embodiment, an example in which the outer wall of the connecting piece 406 is concave in a direction 409 to form the cabling channel is used for description.

In addition, because the cabling channel can limit the optical cable connected to the second optical fiber connector component 402 into the cabling channel, the optical cable connected to the second optical fiber connector component 402 is effectively prevented from blocking the label information 408, thereby effectively ensuring clarity and integrity of the label information 408.

A manner of forming the cabling channel is not limited in this embodiment provided that the cabling channel can avoid an optical cable connected to another optical fiber connector component. For another example, the outer wall of the connecting piece 406 may alternatively be concave in a direction 410 to form the cabling channel. For example, the direction 410 is an axial direction of an optical fiber connector body 411. The direction 409 is a direction perpendicular to the direction 410.

It should be clearly stated that, as shown in FIG. 26, the optical fiber connector component 1824 shown in this embodiment may also be applied to the subrack 200 shown in Embodiment 1, and the adapter is indicated by using identification information of the indication part 250. For specific descriptions, refer to Embodiment 1. Details are not described again.

After the optical fiber connector component 1824 shown above is inserted into the subrack 1821, a cover plate 1822 may be covered on a panel of the subrack 1821, as shown in FIG. 18. A connection manner between the subrack 1821 and the cover plate 1822 is not limited in this embodiment. For example, the connection manner may be a clamping fixing manner, a magnetic connection manner, a hinged connection manner, or a bonding manner. Specifically, this is not limited in this embodiment.

In this embodiment, the cover plate 1822 may be used to identify each adapter included in the subrack 1821. Specifically, the cover plate 1822 includes a plurality of display areas 1825. Specifically, in a state in which the cover plate 1822 is covered on the subrack 1821, a label array corresponds to a display area array.

The label array includes label information included in all optical fiber connector components connected to the subrack 1821, and the display area array includes the plurality of display areas included in the cover plate 1822.

That a label array corresponds to a display area array means that a plurality of pieces of label information included in the label array are in a one-to-one correspondence with the plurality of display areas included in the display area array, that is, a projection formed by the label information in a display area corresponding to the label information is located in the display area.

With reference to FIG. 18 and FIG. 19, label information of the first optical fiber connector component 401 corresponds to a first display area 1826, and a projection formed by label information of the first optical fiber connector component 401 in the first display area 1826 is located in the first display area 1826.

It can be learned that the first display area 1826 can display the label information of the first optical fiber connector component 401.

To achieve an objective that the first display area 1826 can display the label information of the first optical fiber connector component 401, the first display area 1826 shown in this embodiment may be a transparent area or a hollowed-out area.

It should be clearly stated that in this embodiment, an example in which the cover plate 1822 includes the plurality of display areas is used for description. In another example, the cover plate 1822 may also be a transparent area as a whole, so that the cover plate 1822 may be a display area as a whole. Because the cover plate 1822 is made of transparent materials, the cover plate 1822 can display label information of each optical fiber connector component inserted into the subrack 1821.

The cover plate 1822 shown in this embodiment may be divided into a plurality of indication surfaces 1827, and the indication surfaces 1827 are used to set identification information. For specific descriptions of the identification information, refer to Embodiment 1. Details are not described again in this embodiment.

In this embodiment, to identify whether the adapter into which the optical fiber connector body identified by the label information should be inserted is the adapter identified by the identification information, the label information located on the target surface 601 and the identification information located on the indication surface 1827 shown in this embodiment need to meet a preset condition. In this case, the label information and the identification information that meet the preset condition may be identified. For descriptions of the preset condition, refer to Embodiment 1. Details are not described again.

A manner in which the identification information is specifically set on the indication surface 1827 is not limited in this embodiment, for example, a magnetic connection manner or a bonding manner may be used.

The indication surface 1827 shown in this embodiment may be disposed on a front surface of the cover plate 1822. The front surface of the cover plate 1822 is a surface facing away from the subrack 1821. The indication surface 1827 may alternatively be disposed on a back surface of the cover plate 1822. The back surface of the cover plate 1822 is a surface facing the subrack 1821. This is not specifically limited provided that the identification information set on the indication surface 1827 is within the visual range and the capturing range. For descriptions that the identification information is within the visual range and the capturing range, refer to Embodiment 1. Details are not described again.

By using the label system shown in this embodiment, the label information and the identification information that meet the preset condition can be obtained by capturing the subrack, and whether the optical fiber connector body identified by the label information and the adapter identified by the identification information are paired can be directly determined. It can be learned that by using the label system shown in this embodiment, whether the optical fiber connector body identified by the label information is connected to an accurate adapter can be directly identified by using the target image, and identification is not performed in a manual manner or by using a dedicated identification apparatus, thereby improving identification accuracy and efficiency.

In the label system shown in this embodiment, the label information is displayed by using the display area, and the identification information is set on the cover plate, thereby effectively avoiding mutual blocking between the label information and the identification information, and effectively improving efficiency and accuracy of identifying whether the optical fiber connector body and the adapter are paired.

Each label information and each identification information included in the target image and the label information and the identification information that meet the preset condition are identified by using an image identification technology, automatic recording of the adapter into which the optical fiber connector body has been inserted can be implemented, and recording and statistics of each optical fiber connector body inserted into the subrack and an adapter into which the optical fiber connector body has been inserted can be implemented, to improve efficiency of managing resources of the optical fiber connector body and resources of the adapter in the label system.

In addition, in the label system shown in this embodiment, the structure of the subrack does not need to be changed, and identification can be implemented only by setting the display area and the identification information on the cover plate, thereby reducing difficulty in assembling the subrack and difficulty in later maintenance.

Beneficial effects of using the optical fiber connector component shown in this embodiment lie in that the optical fiber connector component shown in this embodiment effectively avoids blocking the label information by the optical cable within the capturing range through the disposed accommodation channel and the cabling channel. Therefore, clarity and integrity of the label information are effectively ensured, and accuracy of identifying the optical fiber connector body by using the label information is improved.

The connecting piece 502, the label module 503, and the plug 504 of the optical fiber connector component shown in this embodiment are integrally formed; the connecting piece 502, the label module 503, the plug 504, and the intermediate piece 512 are integrally formed; or the connecting piece 502, the label module 503, and the intermediate piece 512 are integrally formed. The integrally formed structure forms a housing, thereby effectively improving structural stability of the optical fiber connector component, so that in a subsequent use process of the network node, a position of the label information of the optical fiber connector component does not have an offset, thereby effectively ensuring that the label information can always be within the visual range or the capturing range, and improving accuracy of identifying the optical fiber connector body identified by the label information.

In an existing solution, a large quantity of optical fiber connector components are inserted into the subrack. As a result, positions of different optical fiber connector components are very close to each other. In this case, the optical fiber connector component is identified by using existing RFID, and is interfered by another close optical fiber connector component. For example, in the identification process, the optical fiber connector component may touch another adjacent optical fiber connector component, and may be interfered by the optical cable in the subrack, thereby reducing efficiency of identifying the optical fiber connector component.

However, the subrack shown in this embodiment forms the label array, and the label array includes the label information of all the optical fiber connector components inserted into the subrack. Because different optical fiber connector components are located in the label array, and the entire label array is located in the visual range or the capturing range, the optical fiber connector component can be identified by viewing or capturing the label array. The identification process is not interfered by another optical fiber connector component or the optical cable, and a possibility of interference in the identification process is further effectively avoided by setting the identification information on the cover plate. Therefore, identification efficiency and identification accuracy are improved.

### Embodiment 3

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

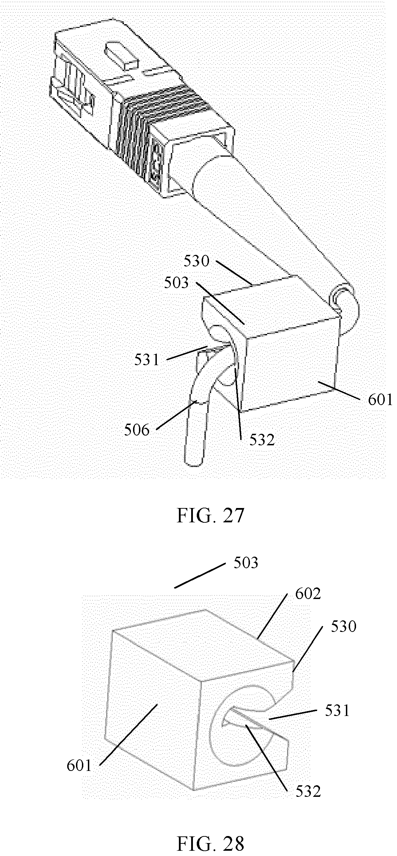

For the structure of the optical fiber connector component shown in this embodiment, refer to FIG. 27 and FIG. 28. The optical fiber connector component shown in this embodiment includes an optical fiber connector body and a label module 503. For specific descriptions of structures of the optical fiber connector body and the label module 503, refer to Embodiment 1. Details are not described again in this embodiment.

The following describes a connection manner between the label module 503 and the optical cable 506 shown in this embodiment.

An opening 531 is disposed on a fifth surface 530 of the label module 503. For descriptions of a specific position of the fifth surface 530 in this embodiment, refer to the descriptions of the position of the second surface shown in Embodiment 1. Details are not described again in this embodiment.

As shown in this embodiment, a channel 532 is disposed through the label module 503, the opening 531 extends in an axial direction of the channel 532, the opening 531 is in communication with the channel 532, and the optical cable 506 passes through the channel 532 via the opening, to implement a connection between the optical cable 506 and the optical fiber connector component.

Optionally, to improve stability of a connection structure between the optical cable 506 and the label module 503, in a direction perpendicular to the axial direction of the channel 532, a height of the opening 531 is less than an outer diameter of the optical cable 506.

It can be learned that, when the label module 503 needs to be connected to the optical cable 506, the optical cable 506 may be squeezed into the channel 532 via the opening 531, so that the optical cable 506 is deformed under an action of extrusion force until the optical cable 506 enters the channel 532. It can be learned that the optical cable 506 can pass through the channel 532 via the opening 531, to implement the connection between the label module 503 and the optical cable 506.

Optionally, the label module further includes a plug cover, and the plug cover is disposed at the opening 531. Optionally, the subrack and the opening 531 may be connected in a clamping fixing manner. A specific connection manner is shown as follows:

An elastic clip is disposed on a plug wall of the plug cover, a clip slot is disposed on an inner wall of the channel 532, and in a state in which the elastic clip is clamped in the clip slot, the plug cover is disposed at the opening 531.

It should be clearly stated that, in this embodiment, the descriptions of the connection manner between the plug cover and the opening 531 are an optional example, and are not limited. For example, the opening 531 and the subrack may alternatively be connected in any manner such as a magnetic connection manner, an elastic connection manner, or a bonding manner.

For descriptions of beneficial effects of this embodiment, refer to Embodiment 1 or Embodiment 2. Details are not described again in this embodiment.

### Embodiment 4

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

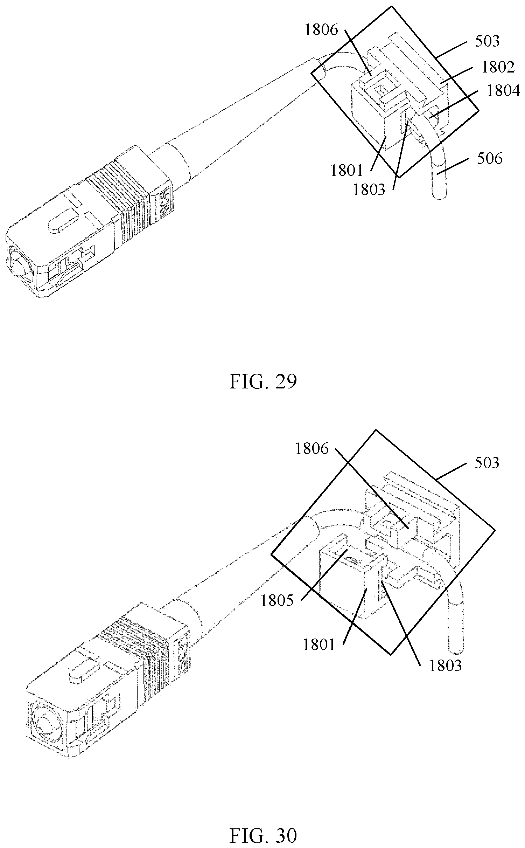

For the structure of the optical fiber connector component shown in this embodiment, refer to FIG. 29 to FIG. 31. The optical fiber connector component shown in this embodiment includes an optical fiber connector body and a label module 503. For specific descriptions of structures of the optical fiber connector body and the label module 503, refer to Embodiment 1. Details are not described again in this embodiment.

The label module 503 shown in this embodiment has a target surface, and the target surface is used to set label information. For specific descriptions of the target surface and the label information, refer to Embodiment 1. Details are not described again in this embodiment.

The target surface shown in this embodiment is within a visual range or a capturing range. For specific descriptions of the visual range and the capturing range, refer to Embodiment 1. Details are not described again.

The following describes a connection manner between the label module 503 and an optical cable 506 shown in this embodiment.

The label module 503 includes a first sub-module 1801 and a second sub-module 1802 that are connected to each other. A first groove 1803 is disposed on the first sub-module 1801, an elastic clip slot 1805 is disposed on an outer peripheral wall of the first groove 1803, and an elastic clip 1806 is disposed on an outer peripheral wall of the second sub-module 1802. In a state in which the elastic clip 1806 is clamped inside the elastic clip slot 1805, the first sub-module 1801 and the second sub-module 1802 are connected.

A second groove 1804 is disposed on the second sub-module. In a state in which the first sub-module 1801 and the second sub-module 1802 are connected, a channel is formed between the first groove 1803 and the second groove 1804.

The optical cable 506 passes through the channel, to implement a connection between the label module and the optical cable 506.

It should be clearly stated that, the descriptions of the connection manner between the first sub-module 1801 and the second sub-module 1802 in this embodiment are an optional example, and are not limited provided that in the state in which the first sub-module 1801 and the second sub-module 1802 are connected, the channel can be formed between the first groove 1803 and the second groove 1804. For example, the first sub-module 1801 and the second sub-module 1802 may be connected in any manner such as a clamping connection manner, a magnetic connection manner, an elastic connection manner, or a bonding manner.

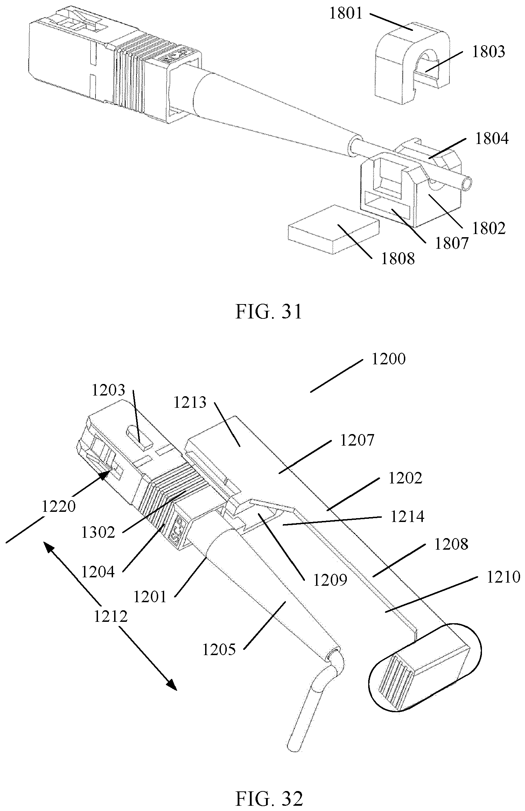

For better understanding, with reference to FIG. 31, a manner in which the first sub-module 1801 and the second sub-module 1802 are magnetically connected is described below.

Accommodation space 1807 is disposed on the second sub-module 1802, and the accommodation space 1807 is in communication with the second groove 1804. Specifically, the second groove 1804 is hollowed out at the bottom. The label module shown in this example further includes a magnet 1808. The magnet 1808 is inserted into the accommodation space 1807, and the magnet 1808 is exposed from the bottom of the second groove 1804 through a hollowed-out area at the bottom of the second groove 1804.

It can be learned that, in a state in which the first sub-module 1801 and the second sub-module 1802 are close to each other, when the first sub-module 1801 is made of metal materials, the magnet 1808 attracts the first sub-module 1801, to implement a connection between the first sub-module 1801 and the second sub-module 1802.

For descriptions of beneficial effects of this embodiment, refer to Embodiment 1 or Embodiment 2. Details are not described again in this embodiment.

### Embodiment 5

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

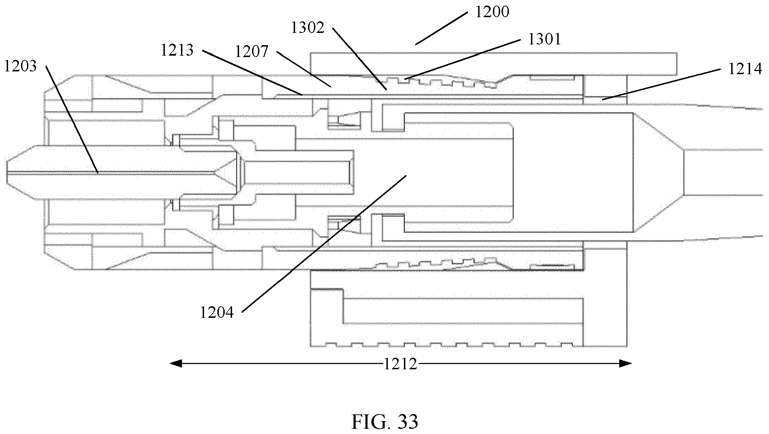

For the structure of the optical fiber connector component shown in this embodiment, refer to FIG. 32 to FIG. 34. The optical fiber connector component shown in this embodiment includes an optical fiber connector body, a connecting piece, and a label module 503. For specific descriptions of structures of the optical fiber connector body and the label module 503, refer to Embodiment 2. Details are not described again in this embodiment.

The optical fiber connector component shown in this embodiment is a detachable connection structure. By using the structure of the optical fiber connector component shown in this embodiment, the optical fiber connector body and the label module can be freely matched and installed based on a requirement, thereby improving a degree of freedom of assembly of the optical fiber connector component.

An optical fiber connector component 1200 shown in this embodiment includes an optical fiber connector body 1201 and a label component 1202.

The following describes a structure of the optical fiber connector body 1201. For descriptions of a type of the optical fiber connector body 1201 shown in this embodiment, refer to the descriptions in Embodiment 1. Details are not described again.

Specifically, the optical fiber connector body 1201 includes a plug 1203, an intermediate piece 1204, and a rear retainer 1205 that are sequentially connected. The plug 1203 is configured to be inserted into an adapter of a subrack. For specific descriptions of the subrack and the adapter, refer to Embodiment 1. Details are not described again.

The intermediate piece 1204 shown in this embodiment is connected between the plug 1203 and the rear retainer 1205. For specific descriptions of the rear retainer 1205, refer to Embodiment 1. Details are not described again.

A structure of the label component 1202 is described below.

The label component 1202 shown in this embodiment includes a connecting piece and a label module 1206 connected to the connecting piece. For specific descriptions of the label module 1206, refer to Embodiment 1. Details are not described again.

The connecting piece includes a mounting groove 1207 and an extension rod 1208. One end of the extension rod 1208 is connected to the mounting groove 1207, and the other end of the extension rod 1208 is connected to the label module 1206. The mounting groove 1207 shown in this embodiment is configured to insert and fix the intermediate piece 1204.

With reference to a specific structure of the mounting groove 1207, the following describes how to insert and fix the intermediate piece 1204 in the mounting groove 1207, to implement a connection between the label component and the optical fiber connector body 1201.

The mounting groove 1207 shown in this embodiment has a concave insertion space 1209, and the insertion space 1209 is used to insert and fix the intermediate piece 1204.

In a state in which the intermediate piece 1204 is inserted into the mounting groove 1207, an accommodation channel 1210 is formed between the mounting groove 1207, the extension rod 1208, and the label module 1206. The accommodation channel 1210 is configured to accommodate the rear retainer 1205 and a part of an optical cable 1211 connected to the rear retainer 1205.

The mounting groove 1207 shown in this embodiment has a first channel opening 1213 and a second channel opening 1214 that are opposite to each other in an axial direction 1212 of the optical fiber connector body 1201. It can be learned that both the first channel opening 1213 and the second channel opening 1214 are in communication with the insertion space 1209, the plug 1203 protrudes from the mounting groove 1207 through the first channel opening 1213, and the second channel opening 1214 is in communication with the accommodation channel 1210. Further, the rear retainer 1205 protruding from the second channel opening 1214 can be accommodated in the accommodation channel 1210.

Specifically, the mounting groove 1207 has a slot 1215. Specifically, the slot 1215 is disposed on an end face, of the mounting groove 1207, that is away from the connecting piece, and the slot 1215 is in communication with the insertion space 1209. The slot 1215 extends in the axial direction 1212 of the optical fiber connector body 1201.

In a process of mounting the optical fiber connector body 1201 and the label component, the intermediate piece 1204 of the optical fiber connector body 1201 can move in a direction 1220 toward the slot 1215 relative to the mounting groove 1207 until the intermediate piece 1204 is inserted into the mounting groove 1207, to implement a connection between the intermediate piece 1204 and the mounting groove 1207. In a state in which the intermediate piece 1204 is inserted into the insertion space 1209, the plug 1203 protrudes from the mounting groove 1207 through the first channel opening 1213. The rear retainer 1205 protrudes from the mounting groove 1207 through the second channel opening 1214, so that the rear retainer 1205 and the part of the optical cable connected to the rear retainer 1205 can be accommodated in the accommodation channel 1210.

The following describes how the intermediate piece 1204 and the mounting groove 1207 are fixed.

A clamping protrusion 1301 is disposed on a groove wall of the mounting groove 1207, and a clamping groove 1302 is disposed on the intermediate piece 1204.

In a state in which the intermediate piece 1204 is inserted into the insertion space 1209 through the slot 1215 of the mounting groove 1207, the clamping protrusion 1301 is clamped and fixed in the clamping groove 1302.

In this embodiment, an example in which the mounting groove 1207 and the intermediate piece 1204 are connected in a clamping fixing manner is used. In another example, the mounting groove 1207 and the intermediate piece 1204 may alternatively be connected in any manner such as a magnetic connection manner, an elastic connection manner, or a bonding manner.

Specifically, the magnetic connection manner may be that a first magnetic piece is disposed on an inner wall of the mounting groove 1207, a second magnetic piece is disposed on an outer wall of the intermediate piece 1204, and magnetic poles of the first magnetic piece and the second magnetic piece are different. Therefore, in a state in which the first magnetic piece and the second magnetic piece are attracted and connected, the intermediate piece 1204 is inserted into and fixed to the mounting groove 1207.

The elastic connection manner may be that the mounting groove 1207 is made of elastic materials, a gap of the slot 1215 of the mounting groove 1207 may be changed under an action of external force, and in a state in which the intermediate piece 1204 is inserted into the mounting groove 1207, the mounting groove 1207 and the intermediate piece 1204 are expanded and fit tightly.

The bonding manner may be that an adhesive layer may be disposed between the mounting groove 1207 and the intermediate piece 1204, and a connection between the inner wall of the mounting groove 1207 and an outer wall of the intermediate piece 1204 is implemented by using the adhesive layer

It should be clearly stated that, a connection manner between the mounting groove 1207 and the intermediate piece 1204 is not limited in this embodiment provided that a detachable connection between the mounting groove 1207 and the intermediate piece 1204 can be implemented.

In this embodiment, in a state in which the intermediate piece 1204 is inserted into the insertion space 1209, label information of the label module 1206 is within a visual range or a capturing range. For specific descriptions that the label information is within the visual range and the capturing range, refer to Embodiment 1. Details are not described again.

By using the optical fiber connector component shown in this embodiment, the label information of the label module 1206 can be effectively prevented from being blocked within the capturing range through the accommodation channel 1210 and a cabling channel disposed in the optical fiber connector component. For specific descriptions of the accommodation channel 1210 and the cabling channel, refer to Embodiment 1. Details are not described again.

The optical fiber connector component shown in this embodiment is a detachable connection structure, and the label component may be connected to the optical fiber connector body at delivery or on a construction site based on a requirement, thereby improving a degree of freedom of a connection between the optical fiber connector body and the label component.

In this embodiment, the connection between the label component and the optical fiber connector body can be implemented by inserting the intermediate piece of the optical fiber connector body into the mounting groove, thereby reducing operation difficulty of connecting the label component to the optical fiber connector body, and improving operation efficiency.

Moreover, because the structure between the label component and the optical fiber connector body is stable, structural stability of the optical fiber connector component is effectively improved, so that in a subsequent use process of a network node, a position of the label information of the optical fiber connector component does not have an offset, thereby effectively ensuring that the label information can always be within the visual range or the capturing range, and improving accuracy of identifying the optical fiber connector body identified by the label information.

For descriptions of beneficial effects of identification on the optical fiber connector component shown in this embodiment, refer to Embodiment 1 or Embodiment 2. Details are not described again in this embodiment.

### Embodiment 6

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

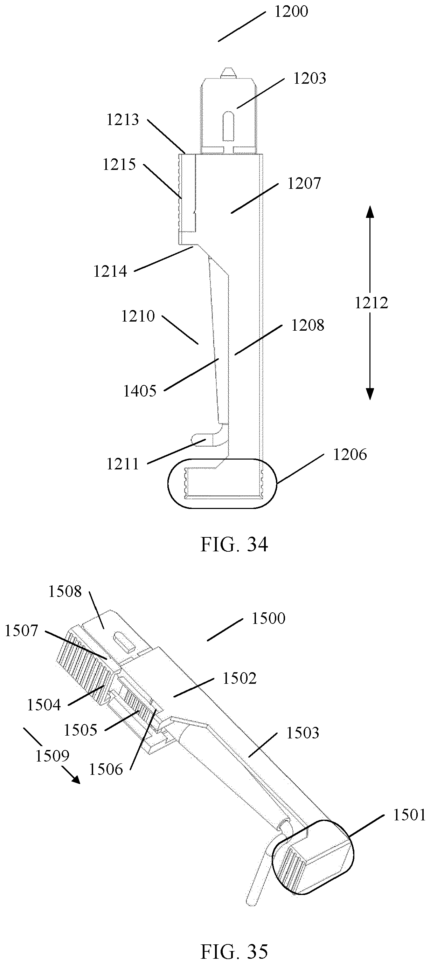

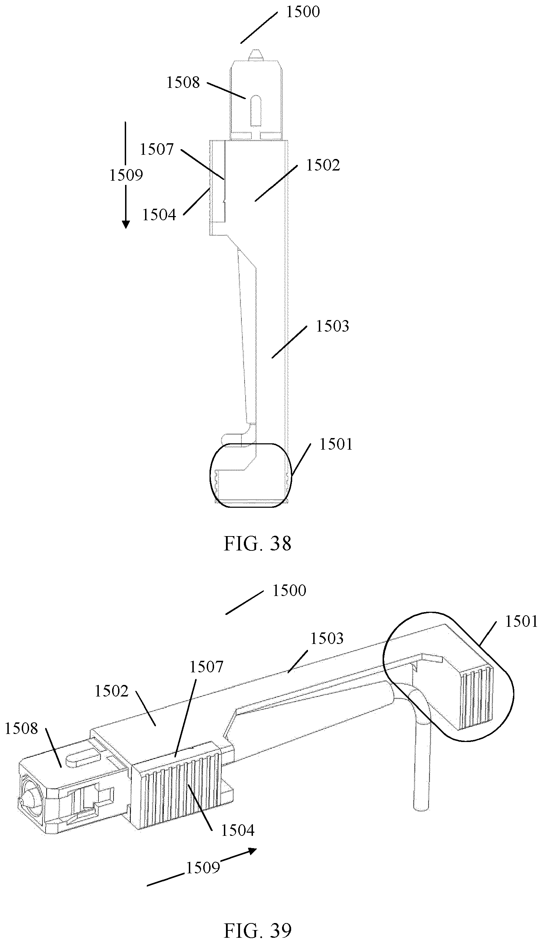

For a specific structure of the optical fiber connector component shown in this embodiment, refer to FIG. 35 to FIG. 39.

An optical fiber connector component 1500 shown in this embodiment includes an optical fiber connector body and a label component. For descriptions of a specific structure of the optical fiber connector body shown in this embodiment, refer to Embodiment 2. Details are not described again in this embodiment.

The label component shown in this embodiment includes a connecting piece and a label module 1501 connected to the connecting piece. For specific descriptions of the label module 1501, refer to Embodiment 1. Details are not described again in this embodiment.

The connecting piece includes a mounting groove 1502 and an extension rod 1503. One end of the extension rod 1503 is connected to the mounting groove 1502, and the other end of the extension rod 1503 is connected to the label module 1501. For specific descriptions of the structures of the mounting groove 1502 and the extension rod 1503, refer to Embodiment 5. Details are not described again in this embodiment.

In this embodiment, to improve stability of a structure between the mounting groove 1502 and the optical fiber connector body, the label component further includes a clamping cover 1504.

In a state in which an intermediate piece 1505 of the optical fiber connector body is inserted into the mounting groove 1502, the clamping cover 1504 is covered at a slot of the mounting groove 1502. For descriptions of the intermediate piece 1505 and the slot of the mounting groove 1502, and a fixing manner between the intermediate piece 1505 and the mounting groove 1502, refer to Embodiment 2. Details are not described again in this embodiment.

In this embodiment, in a state in which the intermediate piece 1505 of the optical fiber connector body is inserted into the mounting groove 1502, due to an abutting effect of the clamping cover 1504 on the intermediate piece 1505, stability of a structure between the intermediate piece 1505 and the mounting groove 1502 is effectively improved, and a case in which the label component is detached from the optical fiber connector body is avoided.

The following describes a connection manner between the clamping cover 1504 and the mounting groove 1502.

An outer side of the slot is concave to form a guide rail 1506, a sliding rail 1507 is protruded at a position at which the clamping cover 1504 is opposite to the guide rail 1506, and in a state in which the sliding rail 1507 is inserted into the guide rail 1506, the sliding rail 1507 can slide along the guide rail 1506 until the clamping cover 1504 is covered at the slot of the mounting groove 1502.

The following describes a specific process of mounting the optical fiber connector body to the label component.

First, the intermediate piece 1505 of the optical fiber connector body is inserted into the mounting groove 1502. For specific descriptions, refer to Embodiment 2. Details are not described again.

Next, as shown in FIG. 35, the sliding rail 1507 of the clamping cover 1504 is inserted into an end of the guide rail 1506 close to a plug 1508, so that the sliding rail 1507 can slide in the guide rail 1506 along a direction 1509. The direction 1509 is an axial direction of the optical fiber connector body.

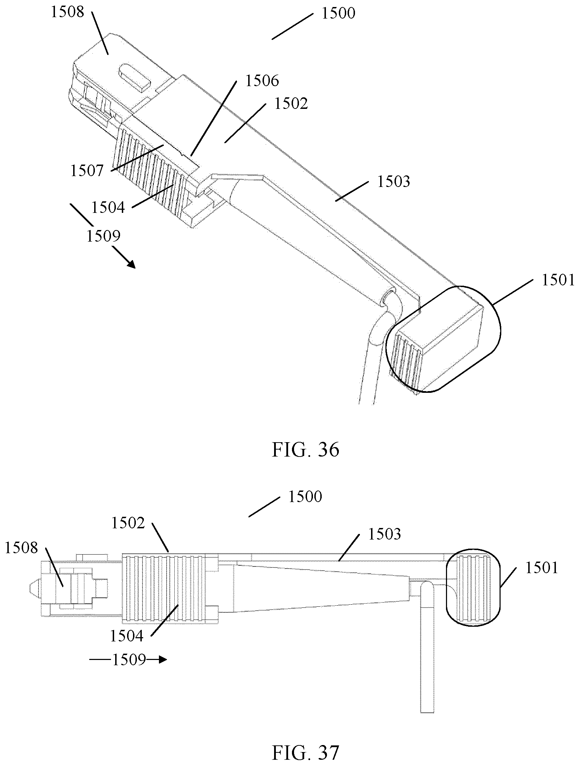

Then, as shown in FIG. 36, the sliding rail 1507 is pushed until the clamping cover 1504 covers the slot of the mounting groove 1502.

The descriptions of the connection manner between the clamping cover 1504 and the mounting groove 1502 in this embodiment are an optional example, and are not limited provided that the detachable connection between the clamping cover 1504 and the mounting groove 1502 can be implemented. For example, the clamping cover 1504 and the mounting groove 1502 may alternatively be connected in any manner such as a magnetic connection manner, an elastic connection manner, or a bonding manner.

In this embodiment, in a state in which the intermediate piece 1505 is inserted into the mounting groove 1502, label information of the label module 1501 is within a visual range or a capturing range. For specific descriptions that the label information is within the visual range and the capturing range, refer to Embodiment 1. Details are not described again.

By using the optical fiber connector component shown in this embodiment, in a state in which the intermediate piece of the optical fiber connector body is inserted into the mounting groove, due to an abutting effect of the clamping cover on the intermediate piece, stability of a structure between the intermediate piece and the mounting groove is effectively improved, and a case in which the label component is detached from the optical fiber connector body is avoided. Therefore, it is effectively ensured that the label information of the optical fiber connector component is always within the visual range or the capturing range, and accuracy and efficiency of identifying the optical fiber connector body identified by the label information are effectively ensured.

For descriptions of beneficial effects of using the label information and the identification information, refer to Embodiment 1 or Embodiment 2. Details are not described again in this embodiment.

### Embodiment 7

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

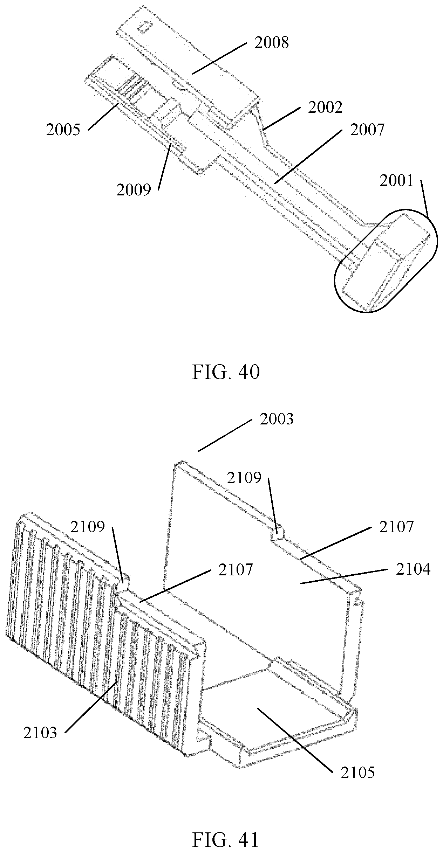

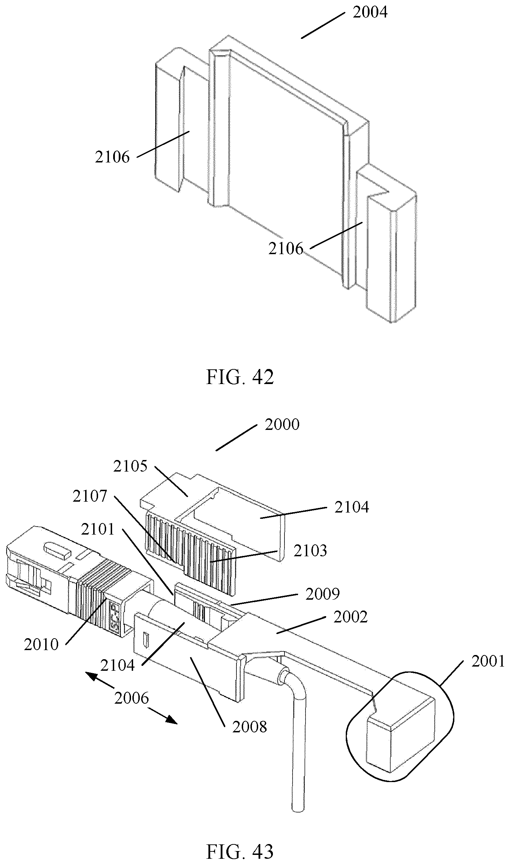

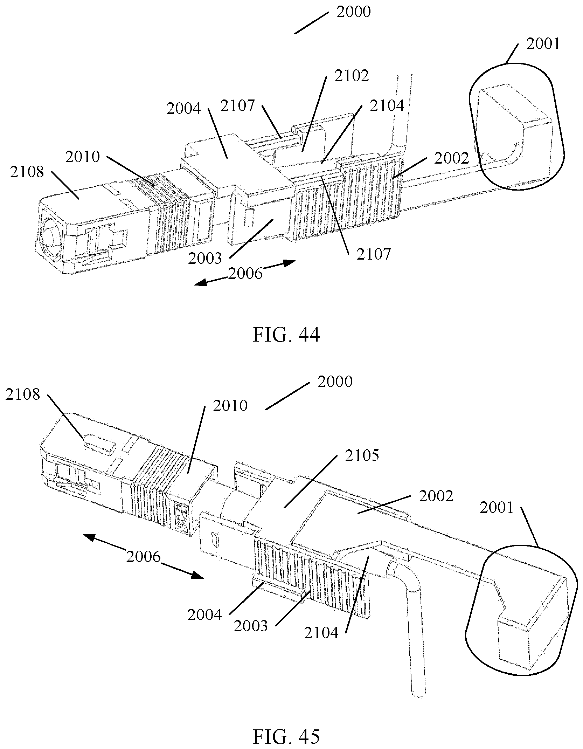

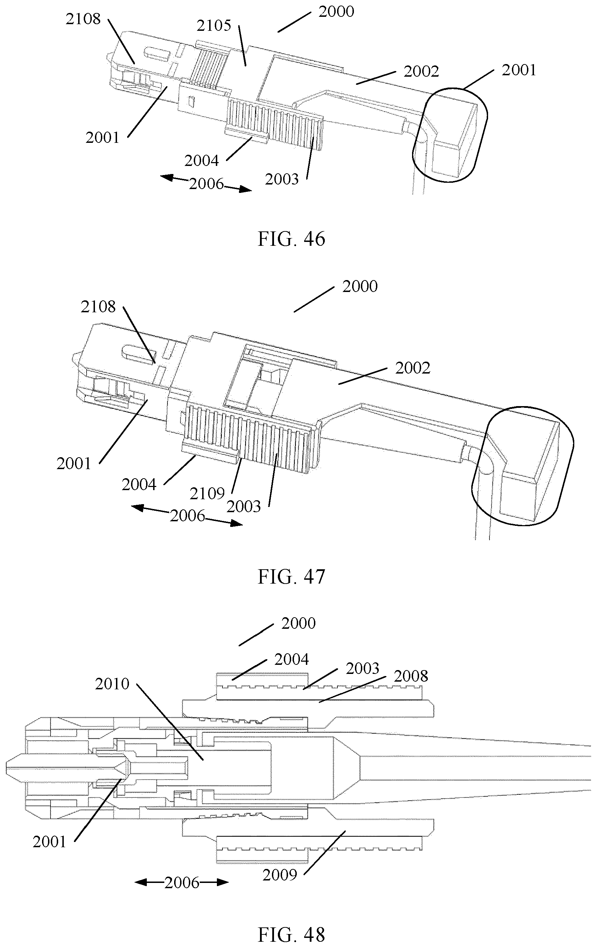

In the optical fiber connector component shown in this embodiment, in a state in which an optical fiber connector body has been inserted into a subrack, a label component may be directly mounted on the optical fiber connector body without pulling out the optical fiber connector body from the subrack. It can be learned that, as shown in this embodiment, in a process of mounting the label component to the optical fiber connector body, optical signal transmission of the optical fiber connector body is not interrupted, thereby improving security of optical signal transmission. For a specific structure of the optical fiber connector component shown in this embodiment, refer to FIG. 40 to FIG. 48.

An optical fiber connector component 2000 shown in this embodiment includes an optical fiber connector body and a label component. For descriptions of a specific structure of the optical fiber connector body shown in this embodiment, refer to Embodiment 2. Details are not described again in this embodiment.

The label component shown in this embodiment includes a connecting piece and a label module 2001 connected to the connecting piece. For specific descriptions of the label module 2001, refer to Embodiment 1. Details are not described again in this embodiment.

The connecting piece shown in this embodiment includes a first member 2002, a second member 2003, and a third member 2004, and the first member 2002, the second member 2003, and the third member 2004 are combined to form the connecting piece.

A first end of the first member 2002 forms a slot 2005 of a mounting groove, and the slot 2005 extends in an axial direction 2006 of the optical fiber connector body. For specific descriptions of the slot 2005 of the mounting groove, refer to Embodiment 5. Details are not described again.

A second end of the first member 2002 is connected to the label module 2001, and an extension rod 2007 is formed between the first end of the first member 2002 and the second end of the first member 2002. For specific descriptions of the extension rod 2007, refer to Embodiment 5. Details are not described again.

A first abutting wall 2008 and a second abutting wall 2009 that are opposite to each other is formed at the first end of the first member 2002, and in a state in which the label component is mounted on the optical fiber connector body, the first abutting wall 2008 and the second abutting wall 2009 are configured to abut again an intermediate piece 2010 of the optical fiber connector body. For specific descriptions of the intermediate piece 2010 of the optical fiber connector body, refer to Embodiment 5. Details are not described again.

A first hollowed-out area 2101 is formed between a first end of the first abutting wall 2008 and a first end of the second abutting wall 2009, and a second hollowed-out area 2102 is formed between a second end of the first abutting wall 2008 and a second end of the second abutting wall 2009. It can be learned that the first hollowed-out area 2101 and the second hollowed-out area 2102 are opposite.

The second member 2003 and the third member 2004 are located on two sides of opposite positions of the first end of the first member 2002. Specifically, the second member 2003 covers the first hollowed-out area 2101 of the first member 2002. The third member 2004 covers the second hollowed-out area 2102 of the first member 2002, to achieve an objective of combining the first member 2002, the second member 2003, and the third member 2004 to form the connecting piece.

It can be learned that the second member 2003 and the third member 2004 are located on two sides of opposite positions of the first end of the first member 2002, and the third member 2004 covers the slot 2005 of the mounting groove. The first member 2002, the second member 2003, and the third member 2004 that are fastened to each other form the mounting groove for accommodating the intermediate piece 2010.

By using the optical fiber connector component shown in this embodiment, when the optical fiber connector body is inserted into an adapter on the subrack, if label information for identifying the optical fiber connector body needs to be set on the optical fiber connector body, the first member 2002, the second member 2003, and the third member 2004 may be directly combined on the optical fiber connector body to form the label component without pulling the optical fiber connector body from the adapter. For specific descriptions of the adapter and the label information, refer to Embodiment 1. Details are not described again. It can be learned that in a process of mounting the label component to the optical fiber connector body shown in this embodiment, an optical signal transmitted by the optical fiber connector body does not need to be interrupted.

The following describes specific structures of the first member 2002, the second member 2003, and the third member 2004 with reference to a process of combining the first member 2002, the second member 2003, and the third member 2004.

First, to mount the label component to the optical fiber connector body, a rear retainer 2104 is first mounted between the first abutting wall 2008 and the second abutting wall 2009 of the first member 2002. For specific descriptions of the rear retainer 2104, refer to Embodiment 5. Details are not described again.

Next, the second member 2003 is fastened on the first hollowed-out area 2101, so that the second member 2003 covers the first hollowed-out area 2101.

Specifically, the second member 2003 has a third abutting wall 2103 and a fourth abutting wall 2104. When the second member 2003 covers the first hollowed-out area 2101, the third abutting wall 2103 abuts against the first abutting wall 2008. The fourth abutting wall 2104 abuts against the second abutting wall 2009.

The second member 2003 further includes a covering piece 2105 connected between the third abutting wall 2103 and the fourth abutting wall 2104, and the third abutting wall 2103 abuts against the first abutting wall 2008. In a state in which the fourth abutting wall 2104 abuts against the second abutting wall 2009, the covering piece 2105 covers the first hollowed-out area 2101.

Next, the third member 2004 is fastened on the second hollowed-out area 2102, so that the third member 2004 covers the second hollowed-out area 2102.

Specifically, rails 2106 are concavely disposed on both sides of the third member 2004, and a guide rail 2107 is disposed at positions of the third abutting wall 2103 and the fourth abutting wall 2104 opposite to the rail 2106. In a state in which the guide rail 2107 is inserted into the rail 2106, the third member 2004 covers the second hollowed-out area 2102. When the guide rail 2107 slides along the guidance of the rail 2106, the third member 2004 slides over the second hollowed-out area 2102.

Then, after the label module is assembled, the first member 2002, the second member 2003, and the third member 2004 that have been connected are moved in a direction close to a plug 2108 of the optical fiber connector body as a whole until a connection between the connecting piece and the intermediate piece 2010 is implemented.

For descriptions of the plug 2108, refer to Embodiment 5. Details are not described again.

In a process of moving the first member 2002 in the direction close to the plug 2108 of the optical fiber connector body, a gap between the first end of the elastic first abutting wall 2008 and the elastic second abutting wall 2009 is enlarged. In this case, the first member 2002, the second member 2003, and the third member 2004 may be moved to a position of the intermediate piece 2010 from a rear retainer 2104 area of the optical fiber connector body. For specific descriptions of the plug 2108, refer to Embodiment 2. Details are not described again in this embodiment.

A clamping protrusion is disposed on the first abutting wall 2008 and the second abutting wall 2009, a clamping groove is disposed on the intermediate piece 2010, and in a state in which the clamping protrusion is clamped and fixed in the clamping groove, a connection between the intermediate piece 2010 and the first member 2002 is implemented. For specific descriptions of the clamping protrusion and the clamping groove, refer to Embodiment 2. Details are not described again.

It should be clearly stated that, in this embodiment, an example in which the intermediate piece 2010 and the first member 2002 are connected in a clamping fixing manner is used. In another example, any manner such as a magnetic connection manner, an elastic connection manner, or a bonding manner may be used. For specific descriptions, refer to Embodiment 2. Details are not described herein.

To secure the structure between the first member 2002, the second member 2003, and the third member 2004 and prevent the label component from falling off the optical fiber connector body, the second member 2003 shown in this embodiment is further provided with an abutting step 2109. When the guide rail 2107 moves to a position mutually abutting against the abutting step 2109. Under the circumferential constraint of the second member 2003 and the third member 2004, the first end of the first abutting wall 2008 and the second abutting wall 2009 of the first member 2002 are fixed to the intermediate piece 2010, and the first member 2002, the second member 2003, and the third member 2004 that are combined hold the intermediate piece 2010.

It can be learned that when the label component needs to be detached from the optical fiber connector body, a reverse process of the foregoing process may be performed, and a specific detachment process is not described again.

In this embodiment, in a state in which the intermediate piece is inserted into the mounting groove, label information of the label module is within a visual range or a capturing range. For specific descriptions that the label information is within the visual range and the capturing range, refer to Embodiment 1. Details are not described again.

By using the optical fiber connector component shown in this embodiment, in a process of mounting the label component to the optical fiber connector body, the optical fiber connector body does not need to be pulled out from the adapter, so that the label component can be mounted on the optical fiber connector body. Therefore, in a scenario in which high-density adapters are arranged in the subrack, operation space is limited and a network is required to be connected, in this embodiment, the optical fiber connector component can be assembled in a state in which the optical fiber connector body is uniformly inserted into the adapter, to effectively avoid a network disconnection in the process of mounting the label component.

For descriptions of beneficial effects of using the label information and the identification information shown in this embodiment, refer to Embodiment 1 or Embodiment 2. Details are not described again.

### Embodiment 8

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

In the optical fiber connector component shown in this embodiment, in a state in which an optical fiber connector body has been inserted into a subrack, a label component may be directly mounted on the optical fiber connector body without pulling out the optical fiber connector body from the subrack. It can be learned that, as shown in this embodiment, in a process of mounting the label component to the optical fiber connector body, optical signal transmission of the optical fiber connector body is not interrupted, thereby improving security of optical signal transmission. In addition, by using the optical fiber connector component shown in this embodiment, efficiency of mounting the label component on the optical fiber connector body can be effectively improved.

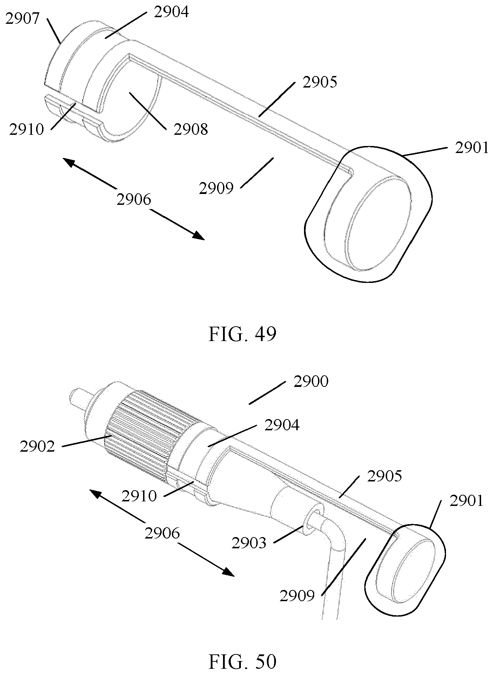

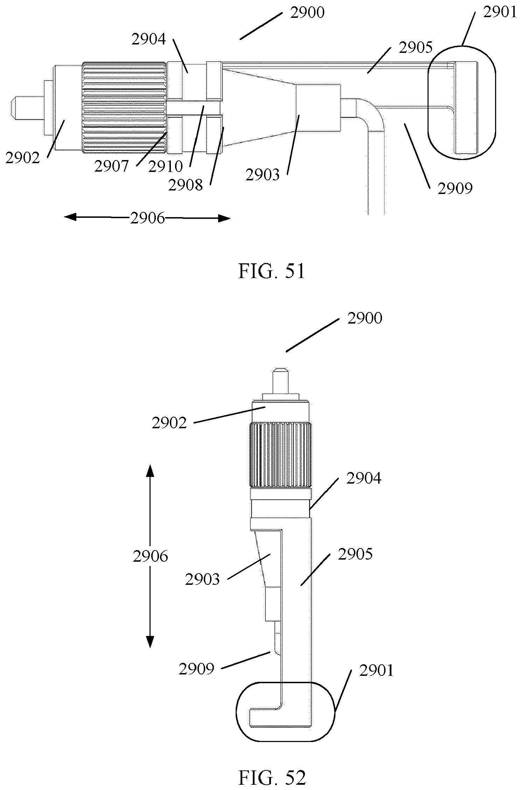

For a specific structure of the optical fiber connector component shown in this embodiment, refer to FIG. 49 to FIG. 52.

An optical fiber connector component 2900 shown in this embodiment includes an optical fiber connector body and a label component.

In this embodiment, an example in which a type of the optical fiber connector body is an FC-type optical fiber connector is used for description. Specifically, the optical fiber connector body includes a plug 2902, an intermediate piece, and a rear retainer 2903 that are sequentially connected. The plug 2902 is configured to be inserted into an adapter of the subrack. For specific descriptions of the subrack, the adapter, the plug 2902, the intermediate piece, and the rear retainer 2903, refer to Embodiment 5. Details are not described again.

The label component shown in this embodiment includes a connecting piece and a label module 2901 connected to the connecting piece. For specific descriptions of the label module 2901, refer to Embodiment 2. Details are not described again in this embodiment.

The connecting piece includes a mounting groove 2904 and an extension rod 2905. One end of the extension rod 2905 is connected to the mounting groove 2904, and the other end of the extension rod 2905 is connected to the label module 2901. The mounting groove 2904 shown in this embodiment is configured to insert and fix the intermediate piece.

An overall structure of the mounting groove 2904 shown in this embodiment is a cylindrical structure in which both top surfaces are hollowed out. It should be clearly stated that the descriptions of the overall structure of the mounting groove 2904 in this embodiment are an optional example, and are not limited provided that the mounting groove 2904 can be inserted into and fixed to the intermediate piece.

With reference to a specific structure of the mounting groove 2904, the following describes how to insert and fix the intermediate piece 1204 in the mounting groove 2904, to implement a connection between the label component and the optical fiber connector body.

The mounting groove 2904 shown in this embodiment has a channel extending in an axial direction 2906 of the optical fiber connector body, and the channel has a first channel opening 2907 and a second channel opening 2908 that are opposite to each other in the axial direction 2906 of the optical fiber connector body. It may be learned that both the first channel opening 2907 and the second channel opening 2908 are in communication with the channel.

In a state in which the intermediate piece is inserted into the mounting groove 2904, the plug 2902 protrudes from the mounting groove 2904 via the first channel opening 2907, and the rear retainer 2903 protruding from the second channel opening 2908 can be accommodated in the accommodation channel 2909. For specific descriptions of the accommodation channel 2909, refer to Embodiment 2. Details are not described again.

To mount the intermediate piece to the mounting groove 2904, a cutting groove 2910 is disposed on a groove wall of the mounting groove 2904 in the axial direction 2906 of the optical fiber connector body, and the cutting groove 2910 is in communication with the channel of the mounting groove 2904.

The mounting groove 2904 shown in this embodiment may be made of elastic materials, so that a gap of the cutting groove 2910 may be changed under an action of external force until the intermediate piece is clamped and fixed in the mounting groove 2904.

In a process of mounting the optical fiber connector body and the label component, the channel of the mounting groove 2904 is sleeved on the rear retainer 2903, and then acting force may be applied to the cutting groove 2910, so that the gap of the cutting groove 2910 is enlarged. The mounting groove 2904 is moved in a direction of the plug 2902 until the intermediate piece is inserted into the channel of the mounting groove 2904.

To enhance stability of the structure between the intermediate piece and the channel of the mounting groove 2904, a groove may be disposed around an outer peripheral wall of the intermediate piece, and in a state in which the channel of the mounting groove 2904 is sleeved in the groove of the intermediate piece, fixing between the mounting groove 2904 and the intermediate piece is implemented.

It should be clearly stated that, the descriptions of the fixing manner between the intermediate piece and the mounting groove 2904 in this embodiment are an optional example, and are not limited provided that a detachable connection relationship between the intermediate piece and the mounting groove 2904 can be implemented. For example, any manner such as a magnetic connection manner, an elastic connection manner, or a bonding manner may be used.

In this embodiment, in a state in which the intermediate piece is inserted into the channel of the mounting groove 2904, label information of the label module 2901 is within a visual range or a capturing range. For specific descriptions that the label information is within the visual range and the capturing range, refer to Embodiment 1. Details are not described again.

By using the optical fiber connector component shown in this embodiment, the label component is integrally formed, when the label component needs to be mounted on the optical fiber connector body, the label component may be directly mounted on the optical fiber connector body, thereby improving mounting efficiency. In addition, in the mounting process shown in this embodiment, a connection can be implemented without performing an alignment operation between the label module and the optical fiber connector body, thereby effectively reducing operation difficulty of mounting the label component on the optical fiber connector component.

For descriptions of beneficial effects of using the label information and the identification information shown in this embodiment, refer to Embodiment 1 or Embodiment 2. Details are not described again in this embodiment.

### Embodiment 9

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

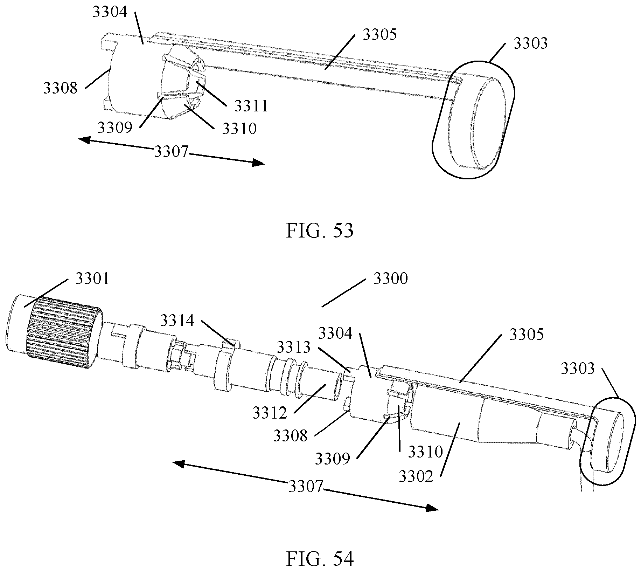

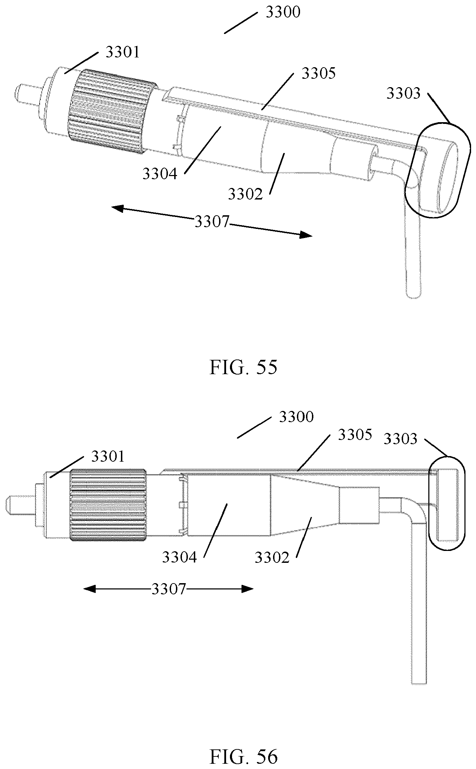

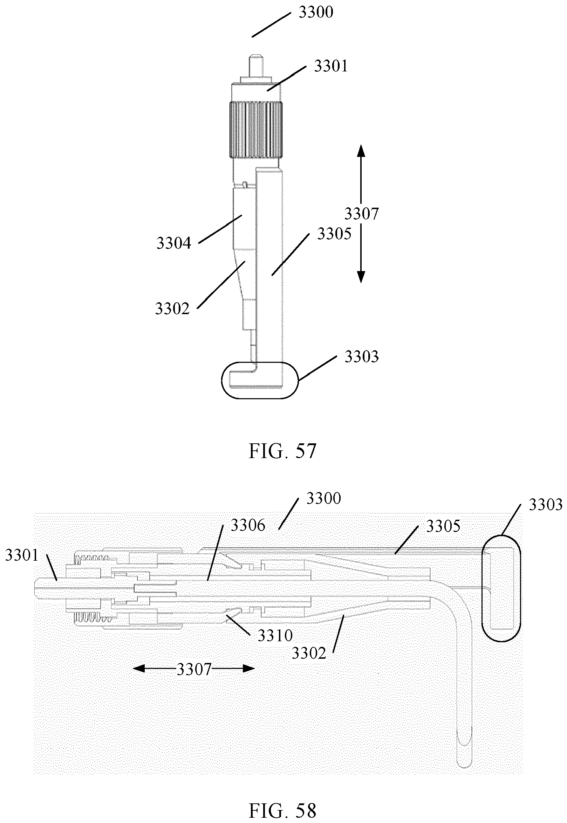

Another structure of the optical fiber connector component is described in this embodiment with reference to FIG. 53 to FIG. 58.

An optical fiber connector component 3300 shown in this embodiment includes an optical fiber connector body and a label component.

In this embodiment, an example in which a type of the optical fiber connector body is an FC optical fiber connector is used for description. Specifically, the optical fiber connector body includes a plug 3301, an intermediate piece 3306, and a rear retainer 3302 that are sequentially connected. The plug 3301 is configured to connect to an adapter, to insert the optical fiber connector component 3300 into a subrack. For specific descriptions of the subrack, the adapter, the plug 3301, the intermediate piece 3306, and the rear retainer 3302, refer to Embodiment 5. Details are not described herein.

The label component shown in this embodiment includes a connecting piece and a label module 3303 connected to the connecting piece. For specific descriptions of the label module 3303, refer to Embodiment 2. Details are not described again in this embodiment.

The connecting piece includes a mounting groove 3304 and an extension rod 3305. One end of the extension rod 3305 is connected to the mounting groove 3304, and the other end of the extension rod 3305 is connected to the label module 3303. The mounting groove 3304 shown in this embodiment is configured to insert and fix the intermediate piece 3306.

An overall structure of the mounting groove 3304 shown in this embodiment is a cylindrical structure in which both top surfaces are hollowed out. It should be clearly stated that the descriptions of the overall structure of the mounting groove 3304 in this embodiment are an optional example, and are not limited provided that the mounting groove 3304 can be inserted into and fixed to the intermediate piece 3306.

With reference to a specific structure of the mounting groove 3304, the following describes how to insert and fix the intermediate piece 3306 in the mounting groove 3304, to implement a connection between the label component and the optical fiber connector body.

The mounting groove 3304 shown in this embodiment has a channel extending in an axial direction 3307 of the optical fiber connector body, and the channel has a first channel opening 3308 and a second channel opening 3309 that are opposite to each other in the axial direction 3307 of the optical fiber connector body. It may be learned that both the first channel opening 3308 and the second channel opening 3309 are in communication with the channel.

The connecting piece shown in this embodiment further includes a plurality of elastic arms 3310, first ends of the plurality of elastic arms 3310 are connected to the second channel opening 3309, and second ends of the plurality of elastic arms 3310 are close to each other.

Specifically, the second ends of the plurality of elastic arms 3310 are close to each other in a natural state, so that the plurality of elastic arms 3310 that are close to each other cover the second channel opening 3309, and accommodation space 3311 is formed between the plurality of elastic arms 3310 that are close to each other. The accommodation space 3311 is configured to accommodate the intermediate piece 3306.

In a process of mounting the mounting groove 3304 to the optical fiber connector body, the intermediate piece 3306 may be inserted into the channel of the mounting groove 3304 from the first channel opening 3308. When the intermediate piece 3306 moves between the plurality of elastic arms 3310 that are close to each other, the plurality of elastic arms 3310 extend in a radial direction of the channel of the mounting groove 3304, so that each elastic arm 3310 has elastic force that rebounds toward an axial line of the channel of the mounting groove 3304.

To fix the mounting groove 3304 and the intermediate piece 3306, an annular groove 3312 is concavely disposed in an outer peripheral wall of the intermediate piece 3306, and the annular groove 3312 is located on an outer peripheral wall of an end of the intermediate piece 3306 that is away from the plug 3301. When the annular groove 3312 moves into the accommodation space 3311 formed between the plurality of elastic arms 3310, at least a part of the elastic force of the plurality of elastic arms 3310 is released on the annular groove 3312. Therefore, the plurality of elastic arms 3310 are clamped and fixed to the annular groove 3312, and fixing between the intermediate piece 3306 and the mounting groove 3304 is further implemented.

It should be clearly stated that, the descriptions of the fixing manner between the intermediate piece 3306 and the mounting groove 3304 in this embodiment are an optional example, and are not limited provided that a detachable connection relationship between the intermediate piece 3306 and the mounting groove 3304 can be implemented. For example, any manner such as a magnetic connection manner, an elastic connection manner, or a bonding manner may be used. For specific descriptions, refer to Embodiment 2. Details are not described again.

In this embodiment, in a state in which the intermediate piece 3306 is inserted into the channel of the mounting groove 3304, label information of the label module 3303 is within a visual range or a capturing range. For specific descriptions that the label information is within the visual range and the capturing range, refer to Embodiment 1. Details are not described again.

It can be learned that, to improve accuracy of identifying the optical fiber connector body identified by the label information, a position of the label information needs to be fixed as much as possible. In this embodiment, the position of the label information may be fixed by avoiding, as much as possible, a case in which the mounting groove 3304 rotates around an axis line of the optical fiber connector body, thereby effectively ensuring identification of the optical fiber connector body identified by the label information.

The first channel opening 3308 is provided with a limiting protrusion 3313 in a direction toward the plug 3301, and a limiting groove 3314 is disposed at a position corresponding to the intermediate piece 3306 and the limiting protrusion 3313. In a state in which the intermediate piece 3306 is inserted into and fixed to the mounting groove 3304, the limiting protrusion 3313 is inserted into the limiting groove 3314.

In a state in which the limiting protrusion 3313 is inserted into the limiting groove 3314, the limiting groove 3314 can limit the mounting groove 3304 to rotate via the limiting protrusion 3313, to fix the position of the label information.

Optionally, in a state in which the intermediate piece 3306 is inserted into the channel of the mounting groove 3304, the rear retainer 3302 may be sleeved on outer peripheral walls of the plurality of elastic arms 3310, to implement assembly of the optical fiber connector component.

How the rear retainer 3302 is specifically sleeved on the outer peripheral walls of the plurality of elastic arms 3310 is not limited in this embodiment. For example, the rear retainer 3302 shown in this embodiment may be made of elastic materials. When the rear retainer 3302 is sleeved on the outer peripheral wall of the intermediate piece 3306, a connection is implemented by expanding and fitting between the rear retainer 3302 and the annular groove 3312. When the rear retainer 3302 and the annular groove 3312 are connected, the plurality of elastic arms 3310 are located within the rear retainer 3302.

By using the optical fiber connector component shown in this embodiment, the optical fiber connector component shown in this embodiment is a detachable connection structure, and the label component may be connected to the optical fiber connector body at delivery or on a construction site based on a requirement, thereby improving a degree of freedom of a connection between the optical fiber connector body and the label component. In this embodiment, the connection between the label component and the optical fiber connector body can be implemented by inserting the intermediate piece of the optical fiber connector body into the mounting groove, thereby reducing operation difficulty of connecting the label component to the optical fiber connector body, and improving operation efficiency.

Because the structure between the label component and the optical fiber connector body is stable, structural stability of the optical fiber connector component is effectively improved, so that in a subsequent use process of a network node, a position of the label information of the optical fiber connector component does not have an offset, thereby effectively ensuring that the label information can always be within the visual range or the capturing range, and improving accuracy of identifying the optical fiber connector body identified by the label information.

By using the optical fiber connector component shown in this embodiment, the label component is integrally formed, when the label component needs to be mounted on the optical fiber connector body, the label component may be directly mounted on the optical fiber connector body, thereby improving mounting efficiency.

For descriptions of beneficial effects of using the label information and the identification information shown in this embodiment, refer to Embodiment 1 or Embodiment 2. Details are not described again.

### Embodiment 10

In Embodiment 1 and Embodiment 2, the descriptions of the structure of the optical fiber connector component included in the label system are an optional example. This embodiment provides another structure of an optical fiber connector component, and a label system shown in this embodiment also includes identification information. For descriptions of the identification information, refer to Embodiment 1 or Embodiment 2. Details are not described again in this embodiment.

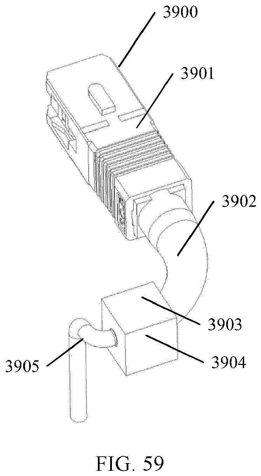

The optical fiber connector component shown in this embodiment does not need to be additionally provided with an accommodation channel and a cabling channel, so that an extension path of an optical cable does not block label information within a visual range or a capturing range. For specific descriptions, refer to FIG. 59.

The optical fiber connector component 3900 includes an optical fiber connector body 3901 and a label component. For descriptions of a type of the optical fiber connector body 3901, refer to Embodiment 1. Details are not described again in this embodiment.

The label component shown in this embodiment specifically includes a connecting piece 3902 and a label module 3903.

The connecting piece 3902 is separately connected to the optical fiber connector body 3901 and the label module 3903. Specifically, a first end of the connecting piece 3902 is connected to the optical fiber connector body 3901, and a second end of the connecting piece 3902 is connected to the label module 3903.

Label information 3904 is set on a target surface of the label module 3903 shown in this embodiment. For specific descriptions of the target surface and the label information 3904, refer to Embodiment 1. Details are not described again.

Specifically, an interior of the connecting piece 3902 shown in this embodiment has a first channel, an interior of the label module 3903 has a second channel, and the first channel and the second channel are in communication, so that an optical cable 3905 of the optical fiber connector body 3901 is extended via the first channel and the second channel.

As shown in FIG. 59, in this embodiment, an example in which an overall structure of the label module 3903 is a rectangular structure is used for description. It should be clearly stated that, in this embodiment, descriptions of the overall structure of the label module 3903 are an optional example, and are not limited provided that it can be ensured that the second channel in the label module 3903 can be in communication with the first channel in the connecting piece 3902 and ensured that the label information set on the label module 3903 is within a capturing range.

Specifically, the optical fiber connector body 3901 shown in this embodiment may include a plug and an intermediate piece. For specific descriptions of the plug and the intermediate piece, refer to Embodiment 2. Details are not described again in this embodiment.

The connecting piece 3902 shown in this embodiment may be a rear retainer, and optionally, the rear retainer shown in this embodiment has specific hardness, so that a position of the rear retainer can be changed under an action of external force. In a process of inserting the optical fiber connector component shown in this embodiment into a subrack, construction personnel may exert acting force on the rear retainer, so that the label information 3904 is within the capturing range.

Optionally, a structure of the rear retainer may not be changed. In this case, it is ensured that the structure of the rear retainer can enable the label information 3904 to be within the capturing range in a factory delivery slabele.

It should be clearly stated that the descriptions of the connecting piece 3902 in this embodiment are an optional example, and are not limited. For example, the optical fiber connector body 3901 shown in this embodiment may include a plug, an intermediate piece, and a rear retainer. For specific descriptions of the plug, the intermediate piece, and the rear retainer, refer to Embodiment 2. Details are not described again in this embodiment.

The connecting piece 3902 shown in this embodiment may be sleeved on an outer peripheral surface of the rear retainer, so that the optical cable 3905 of the optical fiber connector body can extend along the first channel in the connecting piece 3902.

In this example, a connection manner between the connecting piece 3902 and the rear retainer is not limited. For example, the connecting piece 3902 and the rear retainer may be connected in any manner such as an expansion fit manner, a clamping connection manner, a magnetic connection manner, an elastic connection manner, or a bonding manner. For specific descriptions, refer to Embodiment 2. Details are not described again in this embodiment.

The following describes a reason why the connecting piece 3902 shown in this embodiment does not block the label information within the capturing range.

The optical cable 3905 of the optical fiber connector body 3901 shown in this embodiment can be extended via the first channel and the second channel, that is, the optical cable 3905 extends inside the connecting piece 3902 and the label module 3903. It can be learned that the extension path of the optical cable 3905 is not coplanar with the label information 3904, so that the optical cable 3905 does not block the label information 3904 within the capturing range, thereby effectively ensuring clarity and integrity of the label information obtained by a camera.

For descriptions of beneficial effects of using the label information and the identification information shown in this embodiment, refer to Embodiment 1 or Embodiment 2. Details are not described again in this embodiment.

### Embodiment 11

Based on the label system shown in the foregoing embodiment, this embodiment provides an identification method.

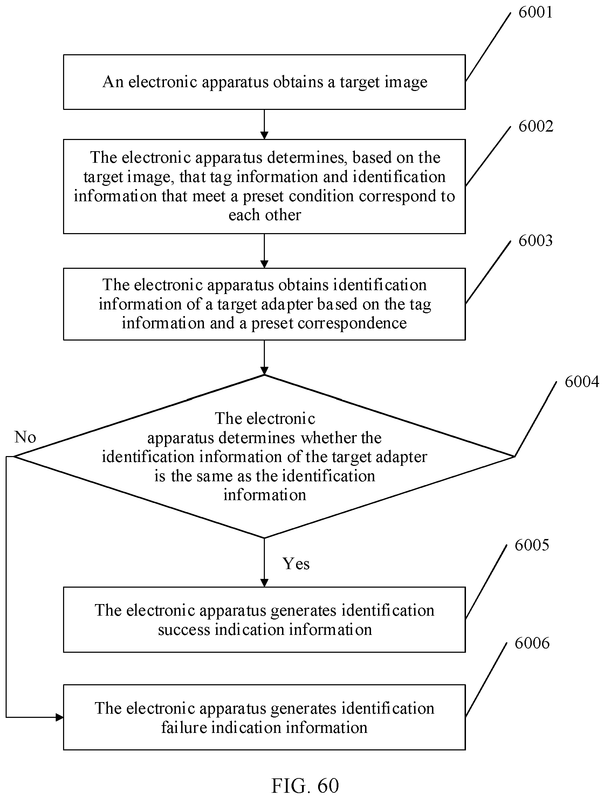

The following describes an execution process of the identification method shown in this embodiment with reference to FIG. 60.

Step 6001: An electronic apparatus obtains a target image.

In this embodiment, an optical fiber connector component is inserted into an adapter array on a subrack, and a camera may obtain the target image when capturing the adapter array.

It can be learned from the foregoing embodiment that when both label information and identification information are within a capturing range, the target image shown in this embodiment includes the label information and the identification information.

The following describes an execution body of the method shown in this embodiment.

The method shown in this embodiment is executed by an electronic apparatus, and the electronic apparatus may be a smartphone, a tablet computer, or the like that includes a camera. The electronic apparatus shown in this embodiment may alternatively be a processor or the like in a computer or a network node included in a label system. If an execution body is a processor included in the computer or the label system, when the camera such as the smartphone or the tablet computer captures the subrack to obtain the target image, the processor included in the computer or the label system may obtain the target image, and then perform identification based on the target image.

It should be clearly stated that the descriptions of the execution body in this embodiment are an optional example, and are not limited provided that the method shown in this embodiment can be executed.

It should be clearly stated that, in this embodiment, an example in which the target image is formed by the camera to capture all areas of the subrack is used for description. In another example, the target image may alternatively be formed by the camera to capture some areas of the subrack. This is not specifically limited in this embodiment.

Step 6002: The electronic apparatus determines, based on the target image, that label information and identification information that meet a preset condition correspond to each other.

In this embodiment, when the electronic apparatus obtains the target image, the electronic apparatus may perform image analysis on the target image, to obtain the label information and the identification information that are included in the target image and that meet the preset condition. For specific descriptions of the preset condition, refer to Embodiment 1. Details are not described again in this embodiment.

Step 6003: The electronic apparatus obtains identification information of a target adapter based on the label information and a preset correspondence.

In this embodiment, the electronic apparatus obtains the preset correspondence, where the preset correspondence includes correspondences between different label information and different target adapters, and the target adapter is an adapter into which an optical fiber connector body identified by the label information needs to be inserted.

Specifically, the target adapter means that, to implement optical signal transmission, optical signal conduction can be implemented only when the optical fiber connector body identified by the label information needs to be inserted into the corresponding target adapter

If the electronic apparatus determines that a corresponding target adapter exists in the preset correspondence for the label information, identification information of the target adapter is obtained by using the preset correspondence.

Step 6004: The electronic apparatus determines whether the identification information of the target adapter is the same as the identification information; and if the identification information of the target adapter is the same as the identification information, performs step 6005; if the identification information of the target adapter is not the same as the identification information, performs step 6006.

In this embodiment, the electronic apparatus obtains the label information and the identification information that meet the preset condition, and determines whether the identification information of the target adapter corresponding to the label information is the same as the identification information that meets the preset condition.

Step 6005: The electronic apparatus generates identification success indication information.

In this embodiment, when the electronic apparatus has determined that the identification information of the target adapter corresponding to the label information is the same as the identification information that meets the preset condition, the success indication information is generated. The success indication information indicates an event that the optical fiber connector component identified by the label information has been inserted into the corresponding target adapter

Maintenance personnel may determine, based on the identification success indication information, that the optical fiber connector body identified by the label information has been inserted into the corresponding target adapter.

Step 6006: The electronic apparatus generates identification failure indication information.

In this embodiment, when the electronic apparatus has determined that the identification information of the target adapter corresponding to the label information is different from the identification information that meets the preset condition, the failure indication information is generated. The failure indication information indicates an event that the optical fiber connector component identified by the label information is not inserted into the corresponding target adapter.

The maintenance personnel may determine, based on the identification failure indication information, that the optical fiber connector body identified by the label information has been inserted into an incorrect adapter

Optionally, to facilitate maintenance of the maintenance personnel, the failure indication information may further include position information of the label information. It can be learned that the maintenance personnel accurately position the label information in a label array based on the position information of the label information included in the identification failure information.

By using the method shown in this embodiment, the label information and the identification information that are included in the target image and that meet the preset condition can be obtained by using the target image, and then it can be determined whether the optical fiber connector body identified by the label information and the adapter identified by the identification information are paired. It can be learned that by using the identification method shown in this embodiment, whether the optical fiber connector body identified by the label information is connected to an accurate adapter can be directly identified by using the target image, and identification is not performed in a manual manner or by using a dedicated identification apparatus, thereby improving identification accuracy and efficiency.

To better understand the method shown in this embodiment, the following describes an example with reference to a specific application scenario.

It should be clearly stated that this application scenario is only used to better understand the method shown in this embodiment, and the specific descriptions shown are merely an example.

First, the camera of the smartphone is aligned with the subrack, so that an entire panel of the subrack is located within the capturing range of the smartphone, and the subrack is captured by using the smartphone to obtain the target image.

Specifically, the entire panel of the subrack is captured by the camera at an upper right corner of a subrack surface.

First, the subrack is captured by using the smartphone to obtain the target image. The target image may be a plurality of adapters included in an adapter array inserted into the panel of the subrack 200 shown in FIG. 3, and arranged in 12 columns and 6 rows.

The target image includes label information of an optical fiber connector component inserted into and fixed to the adapter, where the label information is a two-dimensional code including graphic information.

The target image further includes identification information set below each adapter, where the identification information is a unique identifier.

Next, the smartphone transmits the target image to a computer

Then, the computer identifies, in the target image, label information (a two-dimensional code A) of the optical fiber connector component and identification information (a unique identifier A) that is located below each two-dimensional code A and that is close to the two-dimensional code A.

Label information used to identify different optical fiber connector components has different graphic information, and the unique identifiers used to identify different adapters may be different character strings.

Specifically, in the target image, the computer may identify a plurality of two-dimensional codes (such as the two-dimensional code A, a two-dimensional code B to a two-dimensional code N), and the computer may further identify a plurality of unique identifiers (such as the unique identifier A, a unique identifier B to a unique identifier N).

The computer determines a pair of the two-dimensional code and the unique identifier that meet the preset condition. Specifically, if the unique identifier A is located below the two-dimensional code A, and a distance between the unique identifier A and the two-dimensional code A is the smallest in the target image, it indicates that the unique identifier A and the two-dimensional code A meet the preset condition.

The computer may store a work order system. In the work order system, to implement successful transmission of an optical signal, the optical fiber connector component identified by the two-dimensional code A needs to be inserted into the adapter having the unique identifier A.

If the optical fiber connector component identified by the two-dimensional code A is not inserted into the adapter having the unique identifier A indicated by the work order system, it indicates that the optical fiber connector component identified by the two-dimensional code A is inserted into the incorrect adapter, and the optical fiber connector component identified by the two-dimensional code A cannot transmit an optical signal.

It can be learned that, to ensure successful transmission of the optical signal, the optical fiber connector component identified by the two-dimensional code A needs to be inserted into the corresponding adapter having the unique identifier A.

When the computer determines that the unique identifier A and the two-dimensional code A meet the preset condition, the computer may determine, by querying the work order system, the unique identifier of the adapter corresponding to the optical fiber connector component identified by the two-dimensional code A.

If the unique identifier of the adapter corresponding to the optical fiber connector component identified by the two-dimensional code A is the unique identifier A, it indicates that the optical fiber connector component identified by the two-dimensional code A has been inserted into the accurate adapter, thereby effectively ensuring conduction of an optical signal transmission path.

The computer generates identification success indication information indicating an event that the optical fiber connector component identified by the two-dimensional code A has been inserted into the adapter having the unique identifier A indicated by the work order system.

If the unique identifier of the adapter corresponding to the optical fiber connector component identified by the two-dimensional code A is not the unique identifier A, it indicates that the optical fiber connector component identified by the two-dimensional code A is inserted into the incorrect adapter, and the optical signal transmission path is not conducted.

The computer generates identification failure indication information indicating an event that the optical fiber connector component identified by the two-dimensional code A has been inserted into the incorrect adapter

### Embodiment 12

This embodiment provides a subrack, where the subrack includes an indication part. For specific descriptions of the indication part, refer to Embodiment 1. Details are not described again in this embodiment.

Based on Embodiment 11, an embodiment of this application further provides a computer-readable storage medium. The storage medium stores a software program. When the software program is read and executed by one or more processors, the method provided in Embodiment 11 may be implemented.

The computer-readable storage medium may include any medium that can store program code, such as a USB flash drive, a removable hard disk, a read-only memory, a random access memory, a magnetic disk, or an optical disc.

Based on Embodiment 11, an embodiment of this application further provides a chip. The chip includes a processor, configured to implement functions in Embodiment 11. Optionally, the chip further includes a memory, and the memory is configured to execute program instructions and data that are necessary for the processor. The chip system may include a chip, or include a chip and another discrete device.

## Claims

1. A label system, wherein the label system comprises a subrack, the subrack comprises a plurality of adapters, and the label system further comprises an optical fiber connector component and an indication surface, wherein
the optical fiber connector component comprises an optical fiber connector body and a label module, the label module has a target surface, the target surface is opposite to the optical fiber connector body, the target surface is used to set label information, and the label information is used to identify the optical fiber connector body; and the indication surface corresponds to the label information, the indication surface is opposite to the adapter, the indication surface is used to set identification information, and the identification information is used to identify the adapter into which the optical fiber connector component is inserted.

2. The label system according to claim 1, wherein the label system further comprises an indication part, a first end of the indication part is connected to the subrack, a second end of the indication part has the indication surface, and the identification information is close to the label information.

3. The label system according to claim 2, wherein the second end of the indication part is connected to the label module.

4. The label system according to any one of claims 1 to 3, wherein the subrack comprises a fixing base, and the fixing base is inserted into or fixed to a panel of the subrack.

5. The label system according to claim 4, wherein the fixing base is a first fixing base, and the first fixing base is inserted with the first end of the indication part and the adapter.

6. The label system according to claim 5, wherein the first fixing base comprises an insertion groove, an insertion protrusion is formed at the first end, and in a state in which the insertion protrusion is inserted into the insertion groove, the first end is fixed to the first fixing base; and
a groove wall of the insertion groove extends in a direction perpendicular to an insertion surface to form a first abutting groove, the insertion surface is a surface on which the insertion protrusion is connected to a groove bottom of the insertion groove, and the adapter is inserted into the first abutting groove.

7. The label system according to claim 4, wherein the fixing base is a second fixing base, the second fixing base comprises a second abutting groove, the adapter is inserted into the second abutting groove, at least a part of a side wall of a jack of the adapter extends in a direction away from the jack to form the indication part, and the optical fiber connector component is inserted into the adapter via the jack.

8. The label system according to claim 4, wherein the fixing base is a third fixing base, the third fixing base comprises a third abutting groove, and the adapter is inserted into the third abutting groove; and
an outer wall of the third abutting groove extends in a direction away from the third abutting groove to form the indication part.

9. The label system according to claim 1, wherein the label system further comprises a cover plate disposed on a surface of the subrack, a display area is disposed on the cover plate, a projection formed by the label information in the display area is located in the display area, and the display area is used to display the label information; and
a surface of the cover plate comprises the indication surface.

10. The label system according to claim 9, wherein the cover plate comprises a plurality of display areas, the surface of the cover plate comprises a plurality of indication surfaces respectively corresponding to the plurality of adapters, and a target display area and a target indication surface corresponding to a same adapter are close on the surface of the cover plate.

11. The label system according to claim 9 or 10, wherein the display area is a transparent area or a hollowed-out area

12. The label system according to any one of claims 1 to 11, wherein that the indication surface corresponds to the label information means that the identification information is located in a target orientation of the label information, and that the indication surface corresponds to the label information further means at least one of the following:
a distance between the identification information and the label information is less than or equal to a preset value, or a distance between the label information and the identification information is less than or equal to a distance between the label information and any identification information comprised in the subrack.

13. A subrack, wherein the subrack comprises a plurality of insertion ports, the insertion ports are configured to insert an adapter, the subrack further comprises an indication part, a first end of the indication part is connected to the subrack, a second end of the indication part has an indication surface, the indication surface is opposite to the adapter, identification information is disposed on the indication surface, and the identification information is used to identify the adapter.

14. The subrack according to claim 13, wherein the second end of the indication part is connected to a label module, and the label module is configured to identify an optical fiber connector component inserted into the adapter

15. The subrack according to claim 13 or 14, wherein the subrack comprises a fixing base, and the fixing base is inserted into or fixed to a panel of the subrack.

16. The subrack according to claim 15, wherein the fixing base is a first fixing base, and the first fixing base is inserted with the first end of the indication part and the adapter

17. The subrack according to claim 16, wherein the first fixing base comprises an insertion groove, an insertion protrusion is formed at the first end, and in a state in which the insertion protrusion is inserted into the insertion groove, the first end is fixed to the first fixing base; and
a groove wall of the insertion groove extends in a direction perpendicular to an insertion surface to form a first abutting groove, the insertion surface is a surface on which the first end is connected to a groove bottom of the insertion groove, and the adapter is inserted into the first abutting groove.

18. The subrack according to claim 15, wherein the fixing base is a second fixing base, the second fixing base comprises a second abutting groove, the adapter is inserted into the second abutting groove, at least a part of a side wall of a jack of the adapter extends in a direction away from the jack to form the indication part, and the optical fiber connector component is inserted into the adapter via the jack.

19. The subrack according to claim 15, wherein the fixing base is a third fixing base, the third fixing base comprises a third abutting groove, and the adapter is inserted into the third abutting groove; and
an outer wall of the third abutting groove extends in a direction away from the third abutting groove to form the indication part.

20. An identification method, applied to a label system, wherein the method comprises:
obtaining a target image, wherein the target image is an image obtained by a camera by capturing a subrack, label information and identification information are located in a capturing range of the camera, the subrack comprises a plurality of adapters, the adapter is configured to insert an optical fiber connector component, the label information is used to identify the optical fiber connector component, and the identification information is used to identify the adapter into which the optical fiber connector component is inserted;
obtaining, from the target image, the label information and the identification information that correspond to each other; and
if a corresponding target adapter exists in the label information, determining whether the adapter identified by the identification information is the target adapter.

21. The method according to claim 20, wherein before the determining whether the adapter identified by the identification information is the target adapter, the method further comprises:
determining, based on the target image, that the label information and the identification information that meet a preset condition correspond to each other, wherein the preset condition is that the label information and the identification information are close in the target image.

22. The method according to claim 21, wherein the preset condition is that the identification information is located in a target orientation of the label information, and the preset condition is further at least one of the following:
a distance between the identification information and the label information is less than or equal to a first preset value, or a distance between the label information and the identification information is less than or equal to a distance between the label information and any identification information comprised in the subrack.

23. The method according to any one of claims 20 to 22, wherein the determining whether the adapter identified by the identification information is the target adapter comprises:
obtaining identification information of the target adapter based on the label information and a preset correspondence, wherein the preset correspondence comprises a correspondence between the identification information of the target adapter and the label information;
determining whether the identification information of the target adapter is the same as the identification information; and
if the identification information of the target adapter is the same as the identification information, determining that the adapter identified by the identification information is the target adapter

24. The method according to claim 20, wherein the method further comprises:
determining, based on a preset correspondence, that the label information does not have corresponding identification information of the target adapter, and generating prompt information, wherein the prompt information indicates an event indicating that the label information does not have the corresponding identification information of the target adapter.
